# EUROPEAN PATENT APPLICATION

(11) **EP 1 241 727 A2**
(43) Date of publication of application: **18.09.2002**
(21) Application number: 01113819.5
(22) Date of filing: 06.06.2001
(51) Int. Cl.: H01M 10/40, H01M 4/48

(54) **A lithium secondary battery having one discharge region**

(30) Priority: 15.03.2001 JP 2001073274
(71) Applicant: Hitachi, Ltd., Chiyoda-ku, Tokyo 101-8010 (JP)
(72) Inventor: Yamaki, Takahiro, Hitachi-shi, Ibaraki 316-0025 (JP); Kasai, Masahiro, Mito-shi, Ibaraki 310-0912 (JP); Takeuchi, Seiji, Hitachiohta-shi, Ibaraki 313-0042 (JP)
(74) Representative: Strehl Schübel-Hopf & Partner

(57) **Abstract**

The present invention provides a battery comprising a cathode having a plurality of discharging regions within an operational potential range, an anode having a first irreversible capacity (A_{IR}), a separator for electrically insulating the cathode and the anode and an electrolyte for electrochemically reacting the cathode and the anode wherein a potential of the cathode in a completely discharged state is at least equal or greater than the highest potential among the plurality of discharging regions.

## Description

### FIELD OF THE INVENTION

This invention relates to a lithium secondary battery, in particular, a lithium secondary battery having one discharge region.

### DISCUSSION OF THE RELATED ART

In recent years, with the heightening of the movement to protect the environment, and the eagerness to regulate emission of exhaust gasses, including carbon dioxide as well as other harmful matters in the automobile industry, the replacement of automobiles using fossil fuels such as gasoline, the movement to promote an introduction of an electric vehicle (EV), and a hybrid electric vehicle (HEV) has become active.

As a battery able to drive motors of such EV as well as HEV, a lithium secondary battery with a large energy density is expected to be a promising battery. However a lithium secondary battery is required to attain characteristics such as large capacity, as well as high output so as to attain predetermined acceleration performance, slope-climbing performance, and continuous running performance. For example, when an HEV is in a mode to require output power at the time of acceleration, a high output is required for a battery to drive a motor. Here, the voltage per battery depends on materials configuring the battery. In the case of a lithium secondary battery, the voltage is limited to about 4.2 V.

But, for example, Japanese Patent Laid-Open No. Hei 9-147867 and Japanese Patent Laid-Open No. Hei 11-73962 discloses lithium secondary batteries using, as the cathode active substance, a spinel type Mn series composite oxide material in which lithium can be reversibly incorporated and dissociated at a high potential of 4.5 V or higher on the Li metal base. However, in the discharge curves of these lithium secondary batteries, a discharging region at a high voltage of about 4.5 V and a discharging region at a low voltage of about 4 V are present and an inflection point is present at about 4.2 V between both of the discharging regions. The potential difference between the two discharging regions reaches as high as about 0.5 V. The potential difference between the two discharging regions is due to the presence of two discharging regions of large potential difference between the high potential near 4.5 V and the low potential near 4.0 V in view of electrical characteristics of spinel type Mn composite oxide materials used as a cathode of these lithium secondary batteries. In other words, the two discharge regions are caused by the presence of two reaction systems developing a high potential and a low potential in one active substance.

In these lithium secondary batteries, having the two discharging regions, when charge/discharge are repeatedly conducted over both of the high voltage and low voltage discharging regions, the cycle life of the battery is diminished. It is believed that the repetitive use of the two discharging regions of large potential difference promotes deterioration of the cathode active substance because of the alternate use of the two reaction systems for the cathode active substance.

Another problem in utilizing the two discharging regions is that the control mechanisms for the application equipment are further complicated. For instance, control equipment programmed to send instruction signals to the application equipment at 4 V can be faulty, due to the battery having two discharging regions. Further, in secondary battery modules, since voltage outputted from the module fluctuates due to the slight difference of the capacity or difference of the degree of degradation of the individual secondary batteries in the secondary battery module, this may lead to further complication or cause faulty operation of the control mechanism.

Also, since a differentiation value of a secondary battery voltage is not concerned with the remaining capacity having the two discharging voltage regions, the mechanism for detecting abnormality or the remaining capacity of the battery in the control mechanism is further complicated.

### SUMMARY OF THE INVENTION

In view of the foregoing problems, the present invention provides a lithium secondary battery having one discharging region even when using a cathode active substance having a plurality of discharging potentials with a large potential difference in the operational potential range.

In an object of the present invention a battery is provided comprising a cathode having a plurality of discharging regions within an operational potential range, an anode having a first irreversible capacity (A_{IR}), a separator for electrically insulating the cathode and the anode and an electrolyte for electrochemically reacting the cathode and the anode wherein a potential of the cathode in a completely discharged state is at least equal or greater than the highest potential among the plurality of discharging regions.

In another object of the present invention an electric automobile is provided comprising an electric motor for rotating axles and a power source for powering the electric motor, the power source being a battery comprising a cathode having a plurality of discharging regions within an operational potential range and an anode having a first irreversible capacity (A_{IR}). The invention further provides a separator for electrically insulating the cathode and the anode and an electrolyte for electrochemically reacting the cathode and the anode wherein a potential of the cathode in a completely discharged state is at least equal or greater than the highest potential among the plurality of discharging regions.

In another object of the present invention a battery is provided comprising a cathode having a plurality of discharging regions within an operational potential range, an anode having a first irreversible capacity (A_{IR}), a separator for electrically insulating the cathode and the anode and an electrolyte for electrochemically reacting the cathode and the anode wherein the battery has one discharging region that completely discharges from a final charged voltage to a final discharged voltage without an inflection point.

In another object of the present invention a battery is provided comprising a cathode having a plurality of discharging regions within an operational potential range, an anode having a first irreversible capacity (A_{IR}), a separator for electrically insulating the cathode and the anode and an electrolyte for electrochemically reacting the cathode and the anode wherein a potential of the cathode in a completely discharged state is at least equal or greater than the highest potential among the plurality of discharging regions. The cathode further comprises a second irreversible capacity (C_{IR}) and a first reversible capacity (C_{L}) at a potential lower than the highest potential, having the relationship: (C_{IR}) + (C_{L}) ≦ (A_{IR}).

In yet another object of the present invention a battery is provided comprising a cathode having a plurality of discharging regions within an operational potential range, an anode having a first irreversible capacity (A_{IR}), a separator for electrically insulating the cathode and the anode, an electrolyte for electrochemically reacting the cathode and the anode wherein a potential of the cathode in a completely discharged state is at least equal or greater than the highest potential among the plurality of discharging regions. The battery has a capacity (D) and the cathode further comprises a second reversible capacity (C_{H}) at a potential at least equal or greater than the highest potential, having the relationship: (D) ≦ (C_{H}).

In another object of the present invention a battery is provided comprising a cathode having a plurality of discharging regions within an operational potential range, an anode having a first irreversible capacity (A_{IR}), a separator for electrically insulating the cathode and the anode and an electrolyte for electrochemically reacting the cathode and the anode wherein a potential of the cathode in a completely discharged state is at least equal or greater than the highest potential among the plurality of discharging regions. The invention further provides a second reversible capacity (C_{H}) and a first electrical quantity (D_{C}) reversibly entering and exiting the cathode during operation of the battery having the relationship: (D_{C}) ≦ (C_{H}).

In yet another object of the present invention a battery is provided comprising a cathode having a plurality of discharging regions within an operational potential range, an anode having a first irreversible capacity (A_{IR}), separator for electrically insulating the cathode and the anode and an electrolyte for electrochemically reacting the cathode and the anode wherein a potential of the cathode in a completely discharged state is at least equal or greater than the highest potential among the plurality of discharging regions. The invention further provides a second reversible capacity (C_{H}) and a second electrical quantity (D_{A}) reversibly entering and exiting the anode during operation of the battery having the relationship: (D_{A}) ≦ (C_{H}).

In another object of the present invention a method of manufacturing a battery is provided comprising the steps of providing a cathode having a plurality of discharging regions within an operational potential range, providing an anode having a first irreversible capacity (A_{IR}) and providing a separator for electrically insulating the cathode and the anode. The method further includes the step of providing an electrolyte for electrochemically reacting the cathode and the anode wherein a potential of the cathode in a completely discharged state is at least equal or greater than the highest potential among the plurality of discharging regions.

In another object of the present invention a method of manufacturing a battery is provided comprising the steps of providing a cathode having a plurality of discharging regions within an operational potential range, providing an anode having a first irreversible capacity (A_{IR}) and providing a separator for electrically insulating the cathode and the anode. The method further includes the step of providing an electrolyte for electrochemically reacting the cathode and the anode wherein the battery has one discharging region that completely discharges from a final charged voltage to a final discharged voltage without an inflection point.

In yet another object of the present invention a method of manufacturing a battery is provided comprising the steps of providing a cathode having a plurality of discharging regions within an operational potential range, providing an anode having a first irreversible capacity (A_{IR}) and providing a separator for electrically insulating the cathode and the anode. The method further provides the step of providing an electrolyte for electrochemically reacting the cathode and the anode wherein a potential of the cathode in a completely discharged state is at least equal or greater than the highest potential among the plurality of discharging regions and the cathode further comprises a second irreversible capacity (C_{IR}) and a first reversible capacity (C_{L}) at a potential lower than the highest potential, having the relationship: (C_{IR}) + (C_{L}) ≦ (A_{IR}).

In another object of the present invention a method of manufacturing a battery is provided comprising the steps of providing a cathode having a plurality of discharging regions within an operational potential range, providing an anode having a first irreversible capacity (A_{IR}) and providing a separator for electrically insulating the cathode and the anode. The method further provides the step of providing an electrolyte for electrochemically reacting the cathode and the anode wherein a potential of the cathode in a completely discharged state is at least equal or greater than the highest potential among the plurality of discharging regions and wherein the battery has a capacity (D) and the cathode further comprises a second reversible capacity (C_{H}) at a potential at least equal or greater than the highest potential, having the relationship: (D) ≦ (C_{H}).

In yet another object of the present invention a method of manufacturing a battery is provided comprising the steps of providing a cathode having a plurality of discharging regions within an operational potential range, providing an anode having a first irreversible capacity (A_{IR}) and providing a separator for electrically insulating the cathode and the anode. The method further provides the step of providing an electrolyte for electrochemically reacting the cathode and the anode wherein a potential of the cathode in a completely discharged state is at least equal or greater than the highest potential among the plurality of discharging regions and wherein a second reversible capacity (C_{H}) and a first electrical quantity (D_{C}) reversibly entering and exiting the cathode during operation of the battery has the relationship: (D_{C}) ≦ (C_{H}).

In yet another object of the present invention a method of manufacturing a battery is provided comprising the steps of providing a cathode having a plurality of discharging regions within an operational potential range, providing an anode having a first irreversible capacity (A_{IR}) and providing a separator for electrically insulating the cathode and the anode. The method further includes the step of providing an electrolyte for electrochemically reacting the cathode and the anode wherein a potential of the cathode in a completely discharged state is at least equal or greater than the highest potential among the plurality of discharging regions and wherein a second reversible capacity (C_{H}) and a second electrical quantity (D_{A}) reversibly entering and exiting the anode during operation of the battery has the relationship: (D_{A}) ≦ (C_{H}).

### BRIEF DESCRIPTION OF THE DRAWINGS

The above advantages and features of the invention will be more clearly understood from the following detailed description which is provided in connection with the accompanying drawings.
Fig. 1 is an example of a graph showing a relation between a discharging potential and a discharging capacity of a spinel type composite oxide;
Fig. 2 is an example of a graph showing a relation between a discharging potential and a discharging capacity of a spinel type composite oxide;
Fig. 3 is a schematic view of an electrochemical cell for examining electrochemical characteristics of an active substance;
Fig. 4 is a block diagram showing an example of a constitution of a secondary battery module according to this invention;
Fig. 5 is a graph illustrating the relationship between a discharging potential and a discharging capacity of a cathode active substance in Example 1;
Fig. 6 is a graph illustrating the relationship between the number of cycles and a discharging capacity of a cathode active substance in Example 1;
Fig. 7 is a graph illustrating the relationship between a discharging potential and a discharging capacity of a cathode active substance in Example 2;
Fig. 8 is a graph illustrating the relationship between the number of cycles and a discharging capacity of a cathode active substance in Example 2;
Fig. 9 is a graph illustrating the relationship between a discharging potential and a discharging capacity of the cathode active substance in Example 3;
Fig. 10 is a graph illustrating the relationship between the number of cycles and a discharging capacity of a cathode active substance in Example 3;
Fig. 11 is a graph illustrating the relationship between a discharging potential and a discharging capacity of the cathode active substance in Example 4;
Fig. 12 is a graph illustrating the relationship between the number of cycles and a discharging capacity of a cathode active substance in Example 4;
Fig. 13 is a cross sectional view illustrating an example of a constitution for a cylindrical secondary battery according to this invention;
Fig. 14 is a graph showing a relationship between a discharging voltage and a discharging capacity of a cylindrical secondary battery in Example 5;
Fig. 15 is a graph illustrating the relationship between the number of cycles and a discharging capacity of a cylindrical secondary battery in Example 5 and Comparative Example 1;
Fig. 16 is a graph showing a relationship between a discharging voltage a the discharging capacity of a cylindrical secondary battery in Comparative Example 1;
Fig. 17 is a graph showing a relationship between a discharging voltage and a discharging capacity of a cylindrical secondary battery in Comparative Example 6;
Fig. 18 is a graph showing a relationship between a discharging voltage and a discharging capacity of a cylindrical secondary battery in Comparative Example 7;
Fig. 19 is a schematic view illustrating the secondary battery module in Example 8;
Fig. 20 is a block diagram showing an example for the constitution of an electric automobile in Example 9;
Fig. 21 is a schematic view illustrating the movement of charges in the initial charging;
Fig. 22 is a schematic view illustrating the movement of charges corresponding to an electrical quantity of a anode during discharging after initial charge; and
Fig. 23 is a view schematically illustrating the change with time of a potential relative to an electrical quantity in the initial charging and during discharging after the initial charging.

### DETAILED DESCRIPTION OF THE INVENTION

Exemplary embodiment of the present invention will be described below in connection with the drawings. Other embodiments may be utilized and structural or logical changes may be made without departing from the spirit or scope of the present invention. For instance, although the invention will be described with reference to a secondary battery being utilized in an electric automobile, the invention is not so limited. Accordingly, the invention is equally applicable in any electrical device utilizing a secondary battery, for example, portable telephones, PDA or laptop computers. Also, although the invention is described in terms of a lithium secondary battery, the invention is not so limited and can be applied to any secondary battery having multiple discharge regions. Like items are referred to by like reference numerals throughout the drawings.

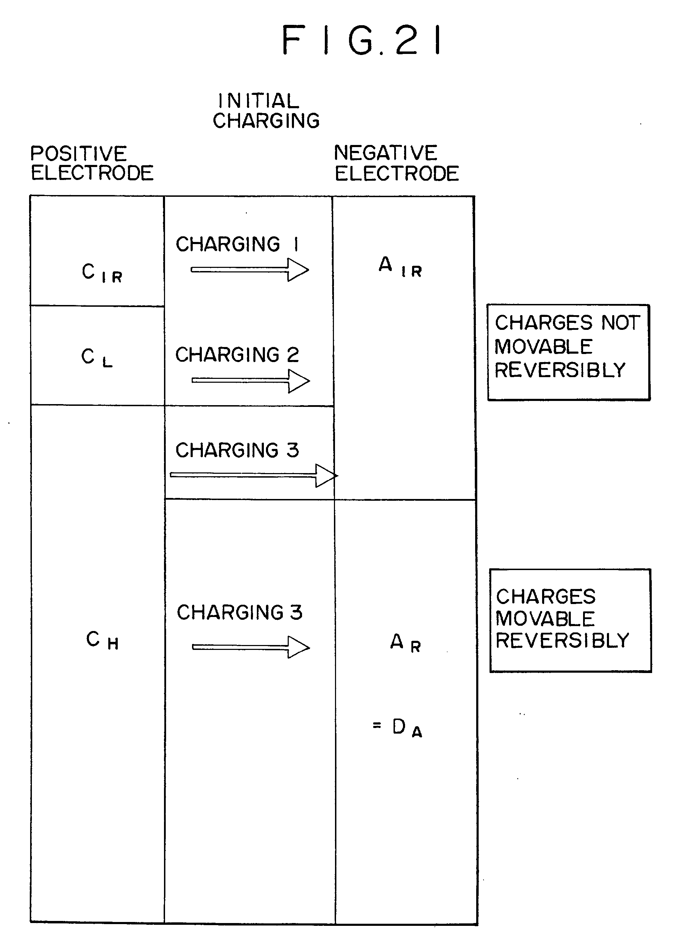

Referring now to Fig. 21 a state of movement of charges in a battery when the thus prepared lithium secondary battery of the present invention as it is initially charged is shown. In the cathode, an ("second") irreversible capacity is (C_{IR}), a ("first") reversible capacity of the discharging region at low potential is (C_{L}) and a ("second") reversible capacity of the discharging region at high potential is (C_{H}). In the anode, an ("first") irreversible capacity is (A_{IR}) and a ("third") reversible capacity is (A_{R}). A lithium secondary battery is manufactured by using the cathode and the anode such that (C_{IR}) + (C_{L}) ≦ (A_{IR}). That is, this is a lithium secondary battery in which the sum of the irreversible capacity and the reversible capacity of the discharging region at low potential of the cathode is equal with or less than the irreversible capacity of the anode. At first, charges corresponding to the irreversible capacity (C_{IR}) at the cathode move to the anode and then charges corresponding to the reversible capacity (C_{L}) in the discharging region at a low potential move to the anode. All the electrical quantity corresponding to (C_{IR}) + (C_{L}) moved to the anode constitute the irreversible capacity (A_{IR}) of the anode in view of the relation: (C_{IR}) + (C_{L}) ≦ (A_{IR}) and the charges hereinafter constitute charges which are not reversible.

As charging continues, charges corresponding to the reversible capacity (C_{H}) at a high potential from the cathode move to the anode in which a portion thereof constitutes the irreversible capacity (A_{IR}) and the remaining portion constitutes the reversible capacity (A_{R}). The electrical quantity (D_{A}) corresponds to charges that constitute the reversible capacity (A_{R}) entering to and exiting from the anode reversibly in the secondary battery. Accordingly, a relation: (D_{A}) ≦ (C_{H}) is formed between (D_{A}) and (C_{H}).

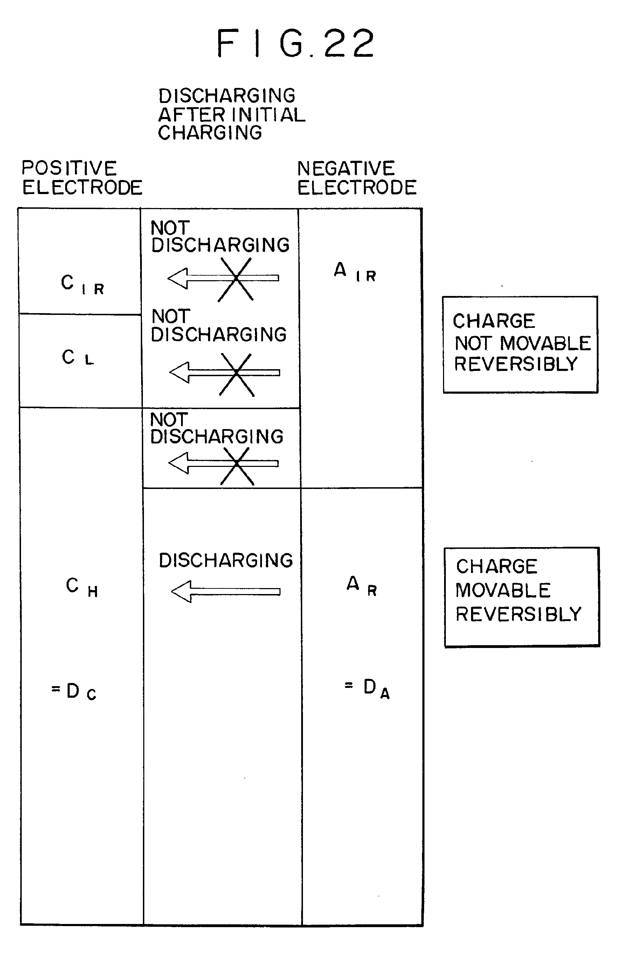

During discharge, charges corresponding to the electrical quantity (D_{A}) move from the anode to the cathode to constitute (C_{H}). This is schematically shown in Fig. 22. According to the relationship (D_{A}) ≦ (C_{H}), the electrical quantity stored in the anode as (D_{A}) is exhausted to complete the discharging before the capacity corresponding to (C_{H}) is completely filled. Therefore, only the discharging region at the high potential is used in the cathode and the discharging region at the low potential is not reversible. Accordingly, a lithium secondary battery having one discharging region is obtained.

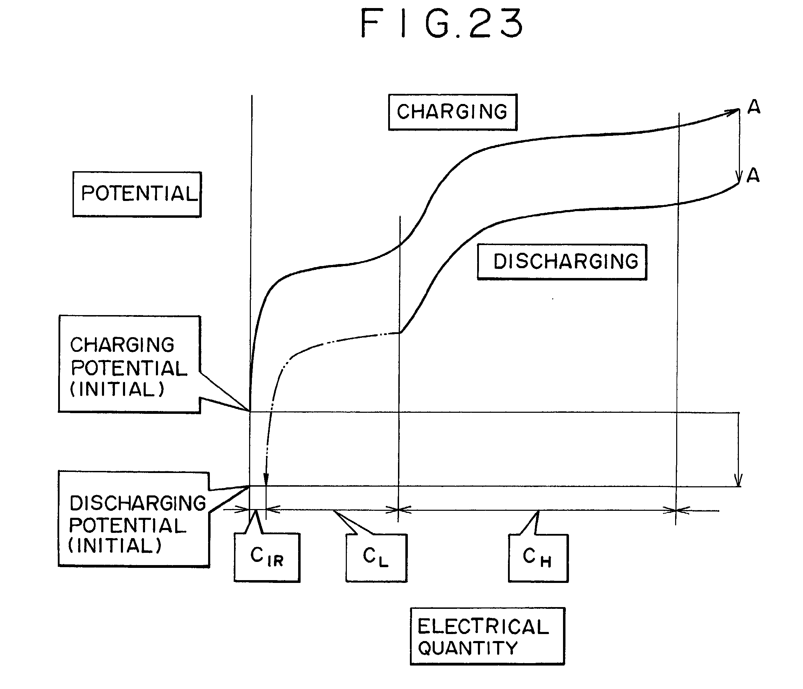

Further, Fig. 23 schematically shows the relationship between the electrical quantity and the potential for the initial charging and discharging after a preset amount of time. In initial charging and subsequent discharging, movement of charges from each of the regions (C_{IR}, C_{L}, C_{H}) of the cathode to the anode is large. That is, while movement of charges can occur to some extent from each of the regions, it is schematically shown that charges move in the order described above. That is, referring to the charging curve of Fig. 23, charging starts at the charging potential of 0 V in which charges move from the region C_{IR} to the anode. Then, charges move from the region C_{L} and, finally, move from the region C_{H}.

In the same manner, in the movement from the anode to the cathode, discharging from a charged state (A in Fig. 23) to C_{H} is first begun. In this invention, since the electrical quantity for the irreversible region of the anode is smaller than the sum for the irreversible region (C_{IR}) and the discharging region at the low potential (the region excluding the discharge region at the highest potential among the plurality of discharging regions: C_{L}) in the cathode, discharging is completed with the discharging curve not proceeding to C_{L} and C_{IR}. That is, since the number of discharges from the anode to the cathode is small, further discharging can not be conducted. Accordingly, a battery is provided comprising a cathode having a plurality of discharging regions within an operational potential range and an anode having a irreversible capacity, wherein a potential of the cathode in a completely discharged state is at least equal or greater than the highest potential among the plurality of discharging regions.

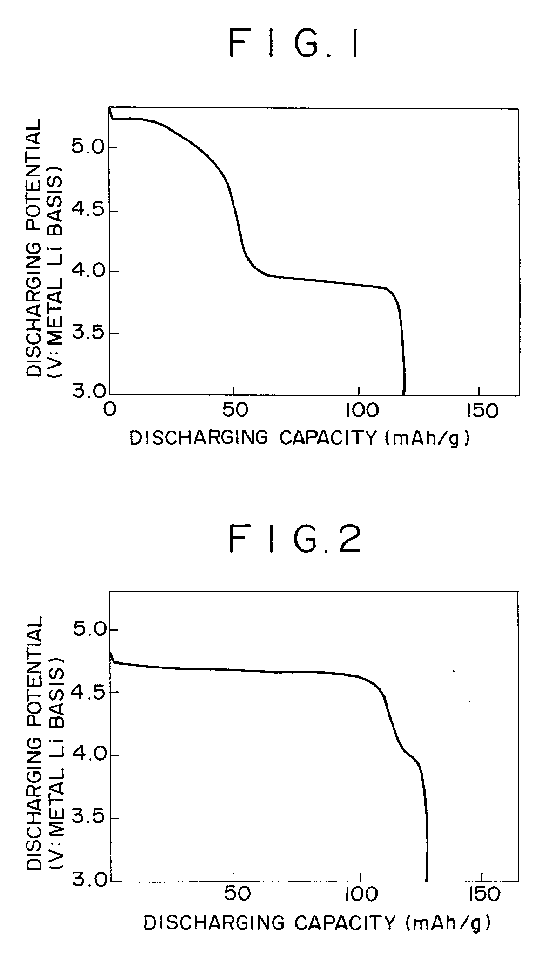

Referring now to Fig. 1, a discharging curve illustrating the relationship between a discharging potential, on the metal lithium basis, of a spinel type composite oxide comprising LiMn_{1.5}Co_{0.5}O₄ and a discharging capacity per unit weight of the composite oxide is shown. The cathode active substance comprising the spinel type composite oxide described above develops a discharging potential at 4.5 V or higher on the metal lithium basis by selecting preferred elements and composition.

Appropriate active substances used for the cathode and the anode are selected. One or plurality of cathode active substances are used in the cathode. One or plurality of anode active substances are used for the anode and a anode active substance having an irreversible capacity is used for at least one of them. When each of the capacity and a ratio for the reversible capacity (C_{H}) in the discharging region at the high potential, the reversible capacity (C_{L}) in the discharging region and the irreversible capacity (C_{IR}) at the low potential of the cathode is designed, cathode active substances suitable thereto can be selected.

Alternatively, a plurality of cathode active substances each of different capacity can be mixed and used at an appropriately ratio. Also, when each of the capacity and the ratio is designed for the irreversible capacity (A_{IR}) and the reversible capacity (A_{R}) of the anode, a anode active substance suitable thereto can also be selected. Alternatively, anode active substances of different capacity can be mixed and used at an appropriately ratio. If necessary, it is also possible not to incorporate a substance not conducting reversible charge/discharge but constituted only with the irreversible capacity (A_{IR}) to the anode.

Further, as the means for designing each of the capacity for the cathode and the anode, thickness and density of the electrode mix containing the active substance are changed to control the amount of the active substance per unit area. Further, a ratio of substances in the electrode mix not relevant to the charge/discharge, for example, a conductive agent or a binder can be adjusted.

First, a weight ratio for each of cathode mix comprising a cathode active substance, a conductive agent and a binder used for the cathode is determined. Separately, a weight ratio for each of anode mix comprising a anode active substance and a binder used for the anode is determined. Then, the amount of the mix per unit area of the cathode is provisionally determined and an initial charging capacity per unit area of the cathode is calculated based thereon. Then, the amount of the mix per unit area of the anode is calculated such that the initial charging capacity per unit area of the anode relative to the calculated initial charging capacity per unit area of the cathode is calculated. In this case, the ratio for the amount of the mix per unit area of the cathode and the anode is controlled such that (C_{IR}) + (C_{L}) ≦ (A_{IR}). Finally, the amount of the mix is controlled such that the thickness of the mix and the density of the mix are suitable in each of the cathode and the anode.

As described above, the ratio for the amount of the mix per unit area of the cathode and the anode is calculated in accordance with the kind of the cathode active substance and the anode active substance, the weight ratio of the cathode active substance in the cathode mix and the weight ratio of the anode active substance in the anode mix.

In the lithium secondary battery of this invention thus manufactured, since only the discharging region at the high potential of the cathode active substance is used although a plurality of discharging regions are present in the cathode active substance, one discharging region is formed. Accordingly, while it has been necessary in the existent lithium secondary battery having a plurality of discharging regions, to restrict the operation voltage so as not to use the discharging region at the low voltage in view of a cycle life or controllability, a lithium secondary battery having an improved cycle life within an extended operational voltage range and of ease of controllability can be obtained.

Further, when compared with the existent lithium secondary battery restricted for the operation voltage, to attain identical cycle property and controllability, since the operation voltage of the lithium secondary battery can be extended according to this invention, higher capacity can also be obtained also under high.

A lithium secondary battery comprises a cathode, a anode, a mechanism for electrically insulating the cathode and the anode and an electrolyte for electro-chemically combining the cathode and the anode. More specifically, it has a cathode active substance capable of reversibly dissociating and introducing Li in the cathode and an anode active substance capable of reversibly reacting with or incorporating or dissociating Li in the anode and having an irreversible capacity. Further, it has a mechanism for electrically insulating the cathode and the anode and an Li-containing non-aqueous electrolyte for electrochemically combining the cathode and the anode.

The cathode active substance can include Li-containing oxides. Spinel type composite oxides containing Li, Mn and at least one transition metal element except for Mn are particularly preferred as the oxides for providing a lithium secondary battery at high voltage since they have a discharging region of 4.5 V or higher on the Li metal basis. The spinel type composite oxides can be represented generally as Liₓ₊ₐMn_{2-x-y}M_{y}O₄. M is an element except for Mn, Li and O and contains at least one transition metal element except for Mn. Specifically, it is desirable that one of Co, Cr, Cu, Fe or Ni is contained and containment of Ni is particularly preferred since a spinel type composite oxide of a large capacity with a discharging region at 4.5 V or higher can be obtained.

Other elements included in M can be, for example, Zn, Ge, Si, Sn, Pb, B, Al, Ga, In, Ti, V, Nb and P. The value a shows that a composition for Li that can be dissociated and incorporated by charge/discharge in the battery, which is within a range: 0 < a ≦ 1.0. Further, each of the values for x and y is preferably within a range: 0 ≦ x ≦ 0.33, 2-x-y > 0 and 0 < y ≦ 1.0.

The spinel type composite oxides can be synthesized by the same methods as those of the general synthesis method for inorganic compounds. That is, they can be synthesized by weighing plurality of compounds as the starting material so as to provide a desired compositional ratio for Li, Mn and the element M and homogeneously mixing and sintering them. Since it is synthesized for the initial composition of the cathode, it is synthesized at a = 1. The compounds usable for the starting material can include, for example, electrolytic manganese dioxide, chemically synthesized manganese dioxide, γ-MnOOH, manganese carbonate, manganese nitrate and manganese hydroxide as the manganese compounds and hydroxides, chlorides, nitrates and carbonates of lithium as the lithium compounds.

As the starting materials for Co, Cr, Cu, Fe and Ni, suitable oxides, hydroxides, chlorides, nitrates and carbonates for each of the elements can be used. Specifically, NiO, Ni₂O₃, Ni(OH)₂, Co₃O₄, CoO, Cr₂O₃, CuO, Fe₂O₃ and Fe₃O₄ can be used. Further, as the starting materials for Zn, Ge, Si, Sn, Pb, B, Al, Ga, In, Ti, V, Nb and P, suitable oxides, hydroxides, chlorides, nitrates and carbonates for each of the elements can be used. Furthermore, compounds containing two or more elements among Li, Mn and the element M can also be used as the starting materials and, for example, a hydroxide starting material can be prepared by adding an alkali solution to an weakly acidic solution containing Mn and Ni as the element M and precipitating the same. The mixing step and the sintering step for the starting material may be a production step of optionally repeated mixing and sintering. In this case, mixing conditions and sintering conditions can be properly selected.

Further, in a case of adopting the production step of repeating the mixing and sintering steps, the starting material may be properly added upon repeating the mixing step so as to provide an aimed compositional ratio in the final sintering step. A preferred sintering temperature may be different depending on the starting material used and stages of the step and it is desirably within a range from about 400°C to 1100°C and it is particularly preferred to conduct sintering at about 750°C to 950°C for about 20 hours or more in the final sintering step.

Further, atmosphere for sintering can include atmospheric air, oxygen atmosphere, hydrogen atmosphere or an inert gas atmosphere such as of nitrogen or rare gas and, particularly, the atmospheric air or the oxygen atmosphere is desirable for the final sintering step. The resultant cathode material is desirably a single phase spinel type oxide with no impurity phase, when determined by X-ray diffractiometry.

Further, the ratio of the discharging region at 4.5 V or higher on the metal lithium basis can be increased by selecting preferred elements and composition. Fig. 2 is a discharging curve illustrating a relation between a discharging potential, on the metal lithium basis, of a spinel type composite oxide comprising LiMn_{1.5}Ni_{0.5}O₄ and a discharging capacity per unit weight of the composite oxide. It can be seen that the reversible capacity of the discharging region at 4.5 V or higher is larger compared with the cathode active substance in Fig. 1.

Further, it can be seen from Fig. 2 that an inflection point is present in the vicinity of 4.2 V between the discharging region at a high potential of 4.5 V or higher and a discharging region at a low potential in the vicinity of 4.0 V and such two discharging regions can be separated at 4.2 V as a boundary. Accordingly, the lithium secondary battery according to this invention using, as the cathode, a cathode active substance comprising the spinel type composite oxide containing at least Ni is also a lithium secondary battery in which relationship for the irreversible capacity (C_{IR}), the reversible capacity (C_{[3.0-4.2]}) in a range from 3.0 V to 4.2 V on the metal Li basis of the cathode, and the irreversible capacity (A_{IR}) of the anode is: (C_{IR}) + (C_{[3.0-4.2]}) ≦ (A_{IR}).

Observing the discharging region of the high potential at 4.5 V or higher in Fig. 2 more closely, a step is present, in the discharging curve in the vicinity of 60 mAh/g as a boundary. However, the potential difference is 0.1 V or less and this can be considered as a substantially continuous one discharging region. Further, this is also a secondary battery where the relationship between a capacity (D_{[3.0-5.5]}) of the lithium secondary battery and a reversible capacity (C_{[≧ 4.2]}) at 4.2 V or higher on the metal Li basis in the operational potential range of the cathode in a case when the lithium secondary battery operates within a range of the final discharging voltage at 3.0 V with the upper limit for the final charging voltage at 5.5 V is: (D_{[3.0-5.5]}) ≦ (C_{[≧ 4.2]}).

Furthermore, in view of the relation: (D_{[3.0-5.5]}) ≦ (C_{[≧ 4.2]}), only the discharging region at the highest potential of the cathode is used in charge/discharge subsequent to the initial charging in the lithium secondary battery according to this invention. Accordingly, this is also a lithium secondary battery having a potential of the cathode at the final discharging voltage of 3.0 V is 4.2 V or higher on the metal Li basis.

As the anode active substance, for example, metal lithium, carbonaceous material or a material capable of incorporating or forming a compound with Li can be used, and the carbon material is particularly suitable as the anode active substance having the irreversible capacity. The carbon material can include graphite material, amorphous carbon material and the like, and their discharging behavior differs somewhat depending on the kind of the carbonaceous materials used for the anode active substance. Generally, since the graphite material shows a flat discharging potential in the vicinity of 0.1 V on the metal Li basis, a lithium secondary battery of stable discharging voltage can be obtained. Further, since the amorphous carbon material generally changes the potential continuously depending on the discharging depth, a lithium secondary battery capable of easy detection for the remaining capacity by the battery voltage can be obtained.

As described above, when the cathode active substance comprising the spinel type composite oxide and the suitable anode active substance are used and the cathode and the anode are designed to such a specification as using only the discharging region of 4.5 V or higher for the cathode active substance, a lithium secondary battery at high voltage with an average discharging voltage of 4.0 V or higher and 5.2 V or lower can be obtained.

The cathode is prepared as described below. A powder as the cathode active substance and a conductive agent are mixed thoroughly. As the conductive agent, a graphitic or amorphous carbon powder is preferably used. A mixing ratio for the cathode active substance and the conductive agent is preferably from 7 to 20% of the conductive agent to the cathode active substance as the weight ratio. A solution in which polyvinylidene fluoride (PVDF) or polytetrafluoroethylene (PTFE) or the like as the binder is mixed into a solvent such as N-methylpyrrolidone (NMP) is further added to the mixture and further mixed to form a slurry.

The slurry is coated to an aluminum foil of 10 to 20 µm thickness and dried at a temperature from 80 to 100°C. It is coated by the same procedure on both surfaces of the aluminum foil. Subsequently, it is compression molded by a roller press to prepare a cathode. For the obtainment of the lithium secondary battery according to this invention, the ratio for the conductive agent and the binder and the coating amount of the slurry are controlled properly within the range described above.

The anode is prepared as described below. In this case, a carbonaceous material is used as the anode active substance having an irreversible capacity. A solution in which PVDF or PTFE as a binder is dissolved in a solvent such as NMP is added to and mixed with the anode active substance to form a slurry. The slurry is coated on a copper foil and dried at a temperature from 80 to 100°C. The slurry is coated and dried by the same procedure on both surfaces of the copper foil. Subsequently, it is compression molded by a roller press to prepare an anode. For the obtainment of the lithium secondary battery according to this invention, the additional amount of the binder and the coating amount of the slurry are properly controlled.

A cylindrical battery is manufactured as described below. The obtained cathode and anode are each cut into a predetermined length. A separator comprising a porous insulator film of 15 to 50 µm thickness is placed between the cathode and the anode as a mechanism for electrically insulating the cathode and the anode, which are cylindrically wound to prepare an electrode group and inserted into a battery vessel made of SUS or aluminum. Porous insulation films made of resins such as polyethylene (PE) or polypropylene (PP), as well as laminates thereof and those formed by dispersing an inorganic compound such as alumina may also be used as the separator.

An electrolyte in which an electrolyte for electro-chemically combining the cathode and the anode is dissolved is injected into the battery vessel in dry air or in an operation container of an inert gas atmosphere. The electrolyte comprises a lithium salt as an electrolyte, which is dissolved in an organic solvent and, optionally, various kinds of additives may also be added. The lithium salt serves to supply Li ions that move in the electrolyte by charge/discharge of the battery, and LiClO₄. LiCF₃SO₃, LiPF₆, LiBF₄ or LiAsF₆ can be used alone or in combination of two or more of them. The organic solvent can include such as carbonates, esters and ethers including, for example, ethylene carbonate (EC), propylene carbonate, butylene carbonate, dimethyl carbonate (DMC), diethyl carbonate, methyl ethyl carbonate, diethyl carbonate, γ-butyrolactone and the like. The Li salt is dissolved by 0.1 to 2 mol/l, preferably, 0.7 to 1.5 mol/l being dissolved in the solvent used alone or as a mixture. Further, additives are used which can include, for example, sulfuric compounds and phosphoric compounds which are soluble to the solvent described above and act also as the solvent. After injecting the electrolyte, the vessel is sealed to form a battery.

Further, a square battery is manufactured as described below. Coating for the cathode and the anode is identical with the case of manufacturing the cylindrical battery. For the manufacture of the square battery, wound groups are prepared around a square center pin as a center. In the same manner as in the cylindrical battery, the wound groups are contained in a battery vessel, an electrolyte is injected and then the battery can is tightly sealed. Further, instead of the wound groups, a laminate formed by laminating in the order of a separator, a cathode, a separator, an anode and a separator can also be used.

When the lithium secondary battery according to this invention is designed, it is desirable that electro-chemical characteristics such as irreversible capacitance, reversible capacity per unit weight of the cathode active substance and the anode active substance, and discharging potential are previously measured. In the measurement, a test electrode is prepared by using the cathode active substance or the anode active substance as described above. An electrochemical cell for simulating a battery comprising a counter electrode having a sufficiently high capacity compared with the test electrode and no substantial irreversible capacity and a reference electrode for determining the reference potential is used, charge/discharge are conducted between the test electrode and the counter electrode, and the potential of the test electrode is measured based on the reference potential.

As an example, a case of measuring the electrochemical characteristic of the cathode active substance based on the metal Li potential is shown. A test cathode is prepared by the same method as that of the cathode used for the battery. 8% by weight of lumpy graphite and 2% by weight of acetylene black as the conductive agent were added to and mixed with 85% by weight of the cathode active substance, which is dispersed in a solution in which 5% by weight of PVDF was previously dissolved as a binder into NMP to prepare a slurry. The cathode mix slurry is uniformly coated on one surface of an aluminum foil of 20 µm thickness and dried. The weight of the cathode mix after drying is set to 10 to 25 mg/cm². Then, it is compression molded by a roller press such that the density of the cathode mix is 2.3 to 3.0 g/cm³. After compression molding, it is punched out into a disk-shape of 15 mm diameter by using a punching tool to prepare a positive test electrode.

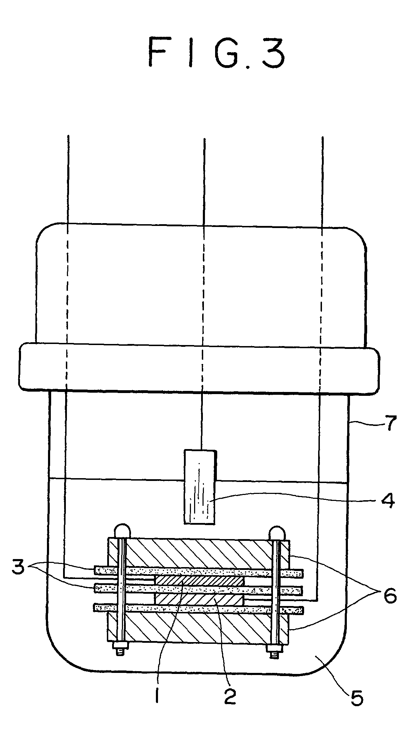

Using the test cathode 1, an electrochemical cell of a constitution as shown in Fig. 3 is manufactured. The electrochemical cell is manufactured in a glove box sealed with an inert gas such as an argon gas. For the electrochemical cell, a test cathode 1, a counter electrode 2 using metal Li and a separator 3 comprising a finely porous polypropylene film of 25 µm thickness are used and they are laminated in the order of the separator 3, the counter electrode 2, the separator 3, the test cathode 1 and the separator 3. In this case, the test cathode is laminated such that the side on which the cathode active substance is present is opposed by way of the separator to the counter electrode. The laminate is sandwiched between stainless steel plates 6 under pressure and then immersed in an organic electrolyte 5. Further, a reference electrode 4 using metal Li is also suspended in the electrolyte. They were contained in a container 7 such as a glass beaker. The organic electrolyte used comprises LiPF₆ corresponding to 1 mol/liter as an electrolyte dissolved in a mixed solvent of ethylene carbonate and diethyl carbonate at a volume ratio of 30:70.

The reversible capacity of the cathode active substance and the anode active substance is different depending on the charge/discharge conditions. In the cathode active substance, when the final charging potential is made higher and the final discharging potential is made lower, the discharging capacity generally tends to be increased. Generally, as the discharging current increases, the discharging capacities of the cathode active substance and the anode active substance tend to be lowered. Further, the discharging current generally gives an effect also on the discharging potential. For example, in the cathode active substance, the discharging potential lowers as the discharging current increases.

The region in which the discharging capacity and the discharging potential change greatly depending on the change of the discharging current is a region where the discharging rate is 1 C (1 hr till completely discharged state) or more and the change is small at the discharging rate or 0.2 C (5 hr to completely discharged state) or less. Then, a current value corresponding to 0.2 C is used in this case upon examining the electrochemical characteristics of the cathode active substance and the anode active substance. When time required for discharging is dissociated by 30 min or more, the current value can also be controlled by increasing the current value when the discharging time is longer and, on the contrary, by decreasing the current value when the discharging time is shorter.

Further, the final charging potential of the cathode is determined by estimating a suitable charging condition by judging the type of the cathode active substance, for example, by X-ray diffractiometry, conducting charging while varying the final charging potential based thereon and examining the change of the discharging capacity. In a case of the spinel type composite oxide having a discharging potential of 4.5 V or higher on the metal Li basis described above, charging is conducted while increasing the final charging potential from 4.5 V on every 0.05 V step, discharging is conducted at a current value of about 0.2 C and, when the charge of the discharging capacity is 2% or less, it is considered as the sufficient charging condition. For example, when the discharging capacity per one gram of the active substance is 120 mAh/g at the final charging potential of 4.9 V and 122 mAh/g at 4.95 V, 4.9 V is regarded as the predetermined final charging potential.

Further, the final discharging potential, in a case of the spinel type composite oxide having a discharging potential of 4.5 V or higher on the metal Li basis, is set to 3.5 V or lower which is lower further by about 0.5 V from the potential of about 4.0 V for the discharging region at the lowest potential and set to about 3.0 V or higher as the potential before charging after manufacture of the electrochemical cell. That is, this is defined within a range from 3.0 V to 3.5 V.

Further, for the final charging and discharging potentials of the anode, the final charging voltage is defined as 0.05 V and the final discharging voltage is defined to a range from 1.0 V to 2.0 V on the metal lithium basis, in the graphite series materials descried above. Further, in the amorphous carbon material, the final charging voltage is defined as 0.05 V and the final discharging voltage is defined within a range from 1.5 V to 2.0 V on the metal lithium basis. The method of measuring the electrochemical characteristics for the cathode and the anode using the electrochemical cell described above is adaptable also for the cathode and the anode constituting the lithium secondary battery.

An example of measuring the electrochemical characteristics of the lithium secondary battery cathode is shown. A lithium secondary battery is disassembled in an inert atmosphere such as argon. This disassembling can be conducted irrespective of the charge or discharged state of the lithium secondary battery. A cathode plate is separated from the disassembled battery, thoroughly cleaned with a cleaning solution, for example, dimethyl carbonate and the cleaning region is dried sufficiently. Subsequently, the entire weight and the area of the cathode plate are measured. Further, the coating area in which the cathode mix is coated is also measured.

Then, the cathode plate is punched out into a disk shape of 15 mm diameter by using a punching tool. When the cathode plate is coated on both surfaces thereof, one surface thereof is completely peeled by using a solvent such as NMP or acetone to prepare a test cathode coated on one surface. By using the test cathode, the electrochemical cell shown in Fig. 3 is manufactured and charge/discharge test is conducted in the same manner as described above.

Thus, the electrochemical characteristics of the cathode in the secondary battery can be recognized. For example, the discharging capacity per unit area in a range from 4.2 V to 5.5 V (of the cathode) on the metal Li basis can be recognized. Based on this and the coating area of the cathode mix measured upon disassembling, a reversible capacity of the cathode in a range from 4.2 V to 5.5 V on the metal Li basis in a secondary battery can be recognized. Further, the potential of a cathode on the metal lithium basis in the secondary battery upon disassembling can also be recognized by measuring the potential of the test cathode upon manufacture of the electrochemical cell.

When the reversible capacity (C_{[4.2-5.5]}) of the cathode constituting the lithium secondary battery within a range from 4.2 V to 5.5 V on the metal Li basis can be recognized by the method described above, the relation between (C_{[4.2-5.5]}) and (D_{[3.0-5.5]}) can be recognized by measuring the capacity (D_{[3.0-5.5]}) of the lithium secondary battery before disassembling. In this specification, the upper limit for the final charging voltage of the lithium secondary battery means that 5.5 V is defined as the upper limit depending on the type of the active substance for the cathode or the anode constituting the battery. The charge/discharge current value is defined as corresponding to 0.2 C.

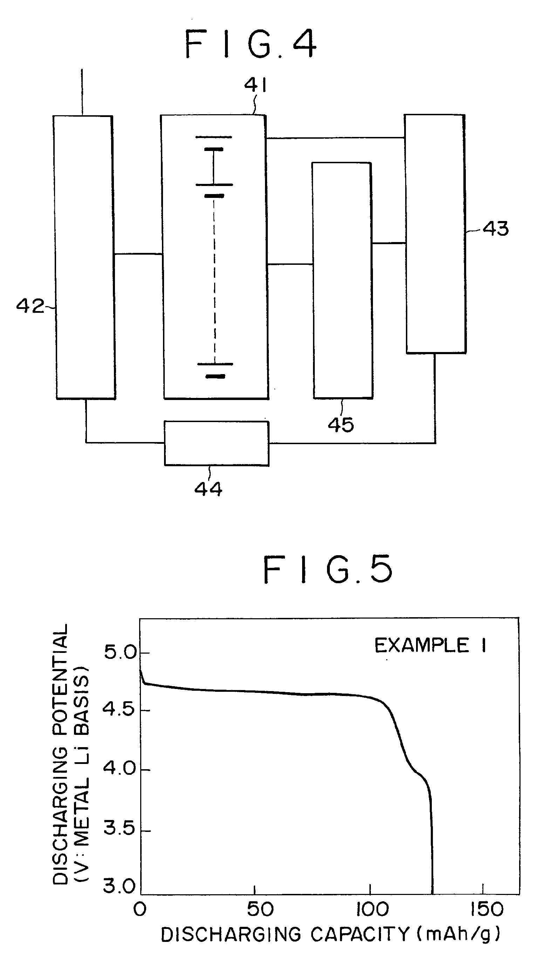

Referring now to Fig. 4, a plurality of secondary batteries 41 are connected in series. A unit 42 for detecting individual battery voltage and a unit 43 for controlling charge/discharge current flowing in each of the batteries are provided, and a unit 44 for giving an instruction to the two units 41 and 42 is further disposed. Communication is conducted between each of the units by means of electric signals.

Upon charging, when voltage for each battery detected by the unit 42 for detecting the battery voltage is lower than a predetermined charging voltage, charging is conducted by supplying current to the battery. The charging current is not supplied to the battery in which the voltage reaches the predetermined charging voltage by the electric signal from the instruction providing unit 44 to prevent overcharging for the battery. In this case, it is desirable to such a constitution of disposing a bypass circuit 45 so as not to supply the charging current only to the battery reaching the predetermined charging voltage.

Further, upon discharging, the voltage for each of the batteries is detected by the voltage detection unit 42 in the same manner as described above and the discharging current is inhibited from flowing when the battery reaches the predetermined discharging voltage. The accuracy upon detecting the battery voltage preferably has a voltage resolution power of 0.1 V or less and, more preferably, 0.02 V or less. A secondary battery module can be realized by detecting the voltage for each of the batteries under effective control and controlling each of the batteries such that they can operate with no overcharging or overdischarging.

The secondary battery module according to this invention uses the lithium secondary battery according to this invention having one discharging region. Accordingly, compared with the secondary battery module constituted by using existent lithium secondary batteries in which a plurality of discharging regions are present, there is no requirement for restricting the operational voltage range of the secondary battery module due to the restriction for the cycle life and the controllability of the secondary battery. Accordingly, there is no restriction on the equipment to be applied and high electrical quantity can also be obtained.

Further, the lithium secondary battery according to this invention can provide higher voltage lithium secondary battery than existent lithium secondary battery of lower voltage with the discharging voltage of about 3.9 V or lower. Accordingly, the number of the batteries can be reduced relative to the voltage to be obtained. Simultaneously, since the constitution for each of the unit for detecting the battery voltage, the unit for controlling current and the unit for giving instruction can be more simplified. Further, the secondary battery module using one lithium secondary battery according to this invention, can be realized with the same constitution as a secondary battery module using a plurality of lithium secondary batteries by eliminating the bypass circuit.

Application use of the secondary battery and the secondary battery module according to this invention has no particular restriction and they are suitable as a power source for various kinds of electric automobiles. The electric automobiles to which this invention is applicable can include those types of being charged from an external power source, or those mounting an electric power generation engine such as a power generator driven by the internal combustion engine or a fuel cell. Further, the secondary battery module according to this invention is suitable also as a power source in a hybrid type automobile using both power sources, such as an internal combustion engine and the power from an electric motor.

Application uses of the secondary battery and the secondary battery module according to this invention can include, for example, various kinds of portable type electronic devices such as personal computers, word processors, cordless telephone terminals, electronic book players, portable telephones, automobile telephones, pagers, handy terminals, portable copiers, electronic notes, pocket computers, liquid crystal television sets, electronic translators and memory cards.

Power sources for various types of portable equipment such as radio receivers, tape recorders, headphone stereo sets, portable CD players, video movies, electronic shavers, portable electromotive tools, transceivers, portable wireless sets and voice input equipment, as well as home electric equipment such as refrigerators, air conditioners, television sets, stereo sets, water warmers, oven electric ranges, tableware washers, dryers, laundry machines, illumination instruments and toys can also be included. Further, as industrial application uses, it is applicable, for example, to medical equipment, golf carts, electric power storing system, and lifts.

An example of an electric automobile constituted by using the secondary battery module according to this invention is to be explained. The number of batteries used for the secondary battery module is determined in accordance with the voltage required for the electric motor of the electric automobile. Further, a plurality of secondary battery modules can be connected in series in accordance with the required voltage. Further, in accordance with the required discharging capacity, the secondary battery modules can be connected in parallel. Preferably, for the drive of the electric motor of electric automobile, the efficiency of the electric motor can be improved by increasing the voltage to about 100 to 300 V.

The secondary battery module may be disposed at optional location for the constituent portions of the automobile and it is desirably located in such a place as below a seat or at the back of the seat where temperature change is relatively small, or such a place where safety can be ensured upon collision. Since temperature elevation is caused by heat generation during running in the battery module, it is preferred to apply cooling, optionally, by means of compulsory air cooling or water cooling. Alternatively, heat dissipating fins or like members of good heat conductivity may be disposed.

As the electric motor for driving the electric automobile, any one of DC motors, induction motors and synchronous motors may be used. When a DC motor is used, it is desirable to conduct speed control by varying the voltage using a chopper circuit using a syrister. Further, in a case of using the AC type induction motor or synchronous motor, the DC current supplied from the module is previously converted into AC current by using an inverter circuit. For the speed control, a variable resister may be connected to a rotor, or a rectifier or an inverter circuit may be used instead of the variable resistor, to convert electric power into AC power. Since the electric motor generates heat during driving the automobile, it is preferably used under water cooling or compulsory air cooling. The power transmitted from the electric motor drives wheels to propel the electric automobile. For effectively utilizing the inertia energy upon deceleration, a power generator connected to a separately provided rotational shaft is used to generate power upon deceleration and the thus obtained electric energy may be supplied to the battery module in a so-called regenerative charging.

In the electric automobile according to this invention, the secondary battery module according to this invention is used. Accordingly, since the restriction on the power by the restriction for the operation voltage range is decreased compared with the case of using the existent secondary battery module constituted with lithium secondary batteries in which a plurality of discharging regions are present, use for higher power is possible. This can provide an electric automobile of long cruising range during high speed running, particularly, requiring high power. Further, an electric automobile of excellent acceleration performance can also be obtained. Further, compared with the secondary battery module using existent lithium secondary batteries at low voltage with a discharging voltage of about 3.9 V or lower, since a secondary battery module more reduced in the weight and the size can be attained in accordance with this invention, an electric automobile of a longer cruising distance per one charging process of more preferable running performance can be obtained and, at the same time, this can provide an advantage capable of higher selectability for location of installation.

Further, when the secondary battery module according to this invention is used to constitute an electric automobile using an internal combustion engine and an electric motor as power sources, a so-called hybrid type automobile is obtained as shown below. Each of the modules is constituted by connecting a plurality of batteries in series in accordance with the voltage to be obtained. Power transmitted from the electric motor is synthesized with the driving force from an internal combustion engine such as a gasoline engine or a diesel engine disposed separately from the electric motor by a power divisional mechanism, for example, using planetary gears and transmitted to axles. It is not always necessary to provide the power divisional mechanism, but driving may always be conducted by both of the electric motor and the internal combustion engine. In this case, the electric motor is directly coupled to a rotational shaft of the internal combustion engine. An electronic circuit is disposed for controlling the number of rotation of the internal combustion engine and the number of rotation of the electric motor in accordance with the vehicle speed thereby controlling two different types of power to propel the hybrid electric vehicle. For effective use of inertial energy upon deceleration, a power generator connected with a separately provided rotational shaft is used to generate electric power upon deceleration, and the thus obtained electric energy may be supplied to the battery module, that is, a so-called regenerative charging. The electric motor and the internal combustion engine as the power source are desirably used selectively such that propelling power of the electric motor is predominant when combustion efficiency of the internal combustion engine is low such as upon starting or acceleration. However, the electric motor may always be used to assist the propelling power of the internal combustion engine.

The hybrid type automobile according to this invention uses the secondary battery module according to this invention. Accordingly, compared with the case of using the secondary battery module constituted with the existent lithium secondary battery in which the plurality of discharging regions are present, since there is less restriction on the power caused by the restriction for the operation voltage range, higher power use is possible, so that a hybrid type automobile having excellent acceleration performance can be obtained.

Compared with the secondary battery module using the existent lithium secondary battery of low voltage at a discharging voltage of about 3.9 V or lower, a secondary battery module reduced in weight and size can be obtained in accordance with the secondary battery module of this invention. Thus, a hybrid type automobile having improved running performance and fuel efficiency can be obtained and it can also provide greater flexibility for the location of installation.

Examples of the secondary battery according to the present invention will now be described. This invention is not restricted to the examples to be described below.

### (Example 1)

In this example, LiMn_{1.5}Ni_{0.5}O₄ was synthesized as a cathode active substance.

As a starting material, after weighing powders of electrolytic manganese dioxide, lithium carbonate (Li₂CO₃) and nickel oxide (NiO) so as to provide a predetermined metal element ratio, they were wet-mixed in a centrifugal ball mill at a room temperature for one hour with purified water to form a starting material powder. It was placed in an aluminum box and sintered in air at 800°C for 20 hours. The sintered starting material was pulverized and mixed again in the centrifugal ball mill and then sintered as second sintering in air at 900°C for 20 hours. When the obtained cathode active substance powder was examined by an X-ray diffraction apparatus, a diffraction peak of a spinel compound with no intrusion of an impurity phase was observed.

For the obtained cathode active substrate, electrochemical characteristics were examined by the following procedures. 8% by weight of lumpy graphite and 2% by weight of acetylene black were added and mixed as a conductive agent to 85% by weight of the cathode active substance, and were dispersed in a solution in which 5% by weight of PVDF was previously dissolved as a binder in NMP to form a slurry. After uniformly coating and drying the cathode mix slurry on one surface of an aluminum foil of 22 µm thickness, it was compression molded by a roller press such that a density of the cathode mix was 2.7 g/cm³. After the compression molding, the product was punched into a disk shape of 15 mm diameter by using a punching tool to prepare a test cathode.

Using the test cathode, an electrochemical cell shown in Fig. 3 using metal Li for a counter electrode and a reference electrode was manufactured and a charge/discharge test was conducted. The charge/discharge current was set to 0.5 mA, the final charging potential was set to 5.1 V on the metal Li basis and the final discharging potential was set to 3.0 V on the metal Li basis. Fig. 5 shows a discharging curve illustrating a relation between a measured discharging potential on the metal lithium basis and a discharging capacity per unit weight of the cathode active substance. It had two discharging regions at high potential and low potential with 4.2 V as a boundary. A reversible capacity at 4.2 V or higher on the metal Li basis was 116 mAh/g, and a cathode active substance having larger reversible capacity in the discharging region at high potential compared with Example 4 (described below) was obtained.

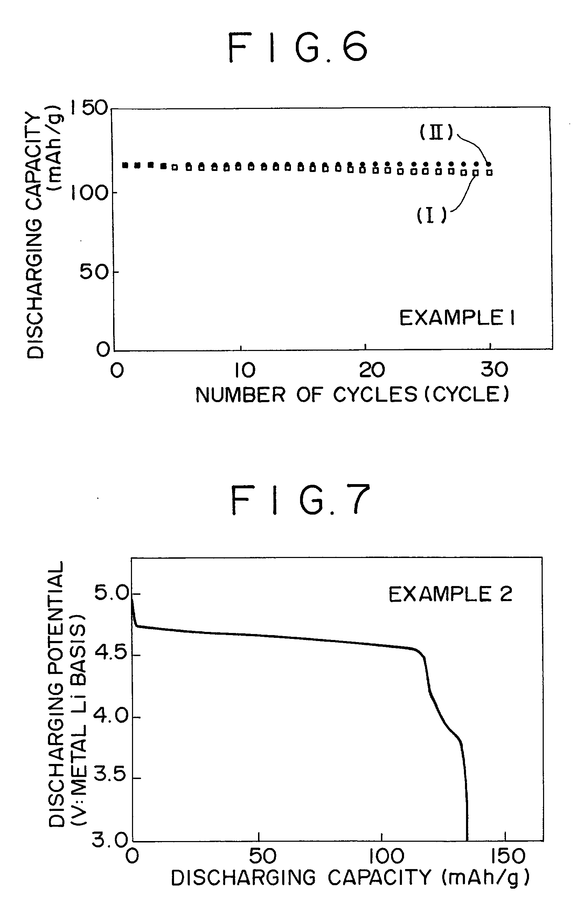

Then, two identical electrochemical cells with those described above were manufactured and a cycle test (I) of repeating charge/discharge using both of the two discharging regions was conducted to one of the cells, while a cycle test (II) of repeating charge/discharging using only the discharging region at high potential was conducted to the other. That is, the final discharging potential was set to 3.0 V on the metal Li base in (1), while the final discharging potential was set to 4.2 V on the metal Li basis in (II) and charge/discharge were repeated under the same conditions as described above for other conditions. Fig. 6 shows a graph illustrating a relation between the charge/discharge repeating number (number of cycles) of the cathode active substance and the charging capacity at high potential (4.2 V or higher) per unit weight of the cathode active substance. Compared with the test (1), lowering of the discharging capacity along with progress of the cycles was smaller, that is, the cycle life was excellent in the test (II).

### (Example 2)

In this example, LiMn_{1.51}Ni_{0.48}B_{0.01}O₄ was synthesized as a cathode active substance.

As a starting material, after weighing powders of electrolytic manganese dioxide, lithium carbonate (Li₂CO₃), nickel oxide (NiO) and boron oxide (B₂O₃) so as to provide a predetermined metal element ratio, they were wet-mixed in a centrifugal ball mill at a room temperature for one hour with purified water to form a starting material powder. It was placed in an aluminum box and sintered in air at 800°C for 20 hours. The sintered starting material was pulverized and mixed again in the centrifugal ball mill and then sintered as second sintering in oxygen at 750°C for 15 hours. When the obtained cathode active substance powder was examined by an X-ray diffraction apparatus, a diffraction peak of a spinel compound with no intrusion of an impurity phase was observed.

For the obtained cathode active substance, electrochemical characteristics were examined in the same manner as in Example 1. Fig. 7 shows a discharging curve illustrating a relation between a measured discharging potential on the metal lithium basis and discharging capacity per unit weight of the cathode active substance. It had two discharging regions at high potential and low potential with 4.2 V as a boundary. A reversible capacity at 4.2 V or higher on the metal Li basis was 120 mAh/g, and a cathode active substance having larger reversible capacity in the discharging region at high potential compared with Example 4 (described below) was obtained.

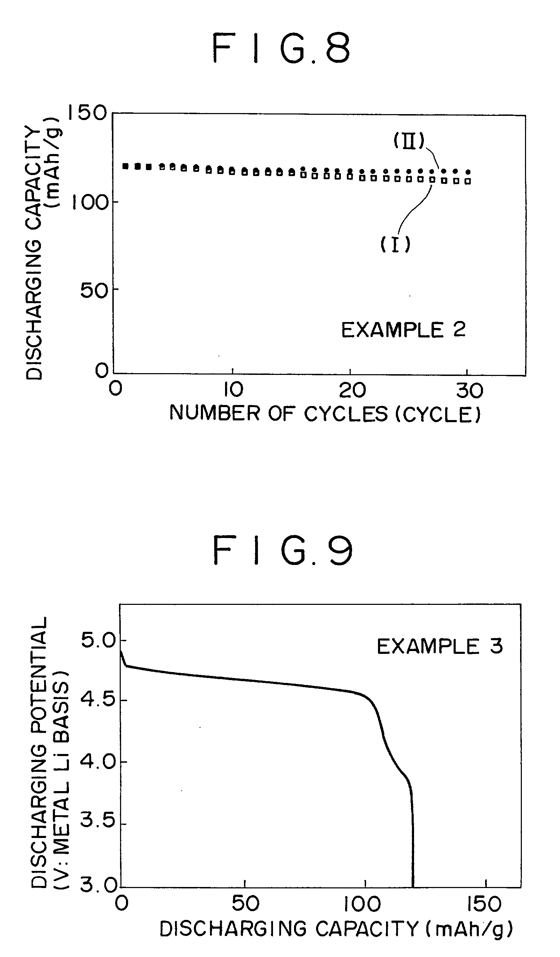

Then, two electrochemical cells were prepared in the same manner as in Example 1 and the cycle test (I) and the cycle test (II) were conducted. Fig. 8 shows a graph illustrating a relation between the charge/discharge repeating number (number of cycles) and the charging capacity at high potential (4.2 V or higher) per unit weight of the cathode active substance. Compared with the test (1), lowering of the discharging capacity along with the progress of the cycles was smaller, that is, the cycle life was better in test (II).

### (Example 3)

In this example, LiMn_{1.45}Ni_{0.45}Co_{0.1}O₄ was synthesized as a cathode active substance.

As the starting material, after weighing powders of electrolytic manganese dioxide, lithium carbonate (Li₂CO₃), nickel oxide (NiO) and cobalt oxide (CoO) so as to provide a predetermined metal element ratio, they were wet-mixed in a centrifugal ball mill at a room temperature for one hour with purified water to form a starting material powder. It was placed in an aluminum box and sintered in air at 1050°C for 15 hours. Powder of lithium carbonate was added to the sintered starting material, which was pulverized and mixed again in the centrifugal ball mill and then sintered as second sintering in air at 800°C for 20 hours. When the obtained cathode active substance powder was examined by an X-ray diffraction apparatus, a diffraction peak of a spinel compound with no intrusion of an impurity phase was observed.

For the obtained cathode active substance, electrochemical characteristics were examined in the same manner as in Example 1. Fig. 9 shows a discharging curve illustrating a relation between a measured discharging potential on the metal lithium basis and discharging capacity per unit weight of the cathode active substance. It had two discharging regions at high potential and low potential with 4.2 V as a boundary. A reversible capacity at 4.2 V or higher on the metal Li basis was 108 mAh/g, and a cathode active substance having larger reversible capacity in the discharging region at high potential compared with Example 4 (described below).

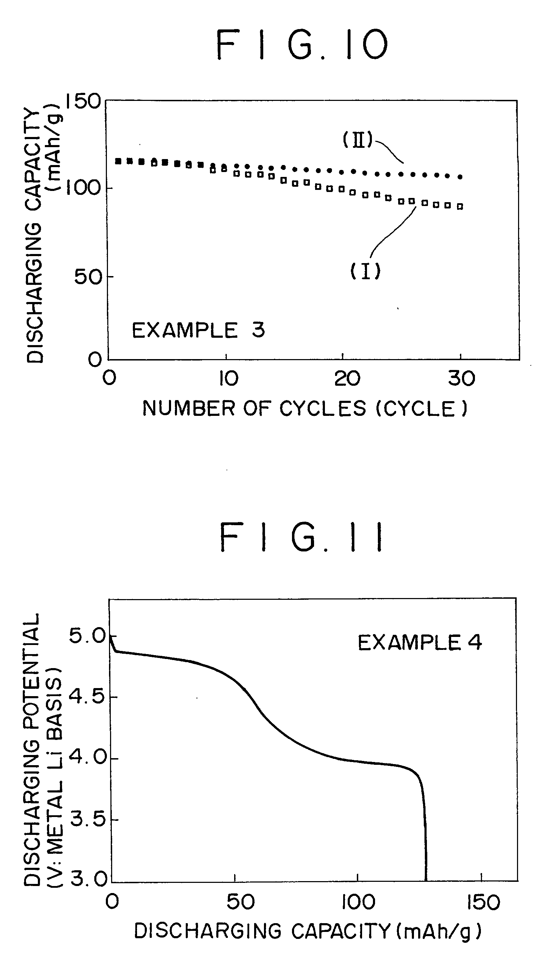

Then, two electrochemical cells were prepared in the same manner as in Example 1 and the cycle test (I) and the cycle test (II) were conducted. Fig. 10 shows a graph illustrating the relationship between the charge/discharge repeating number (number of cycles) and the charging capacity at the high potential (4.2 V or higher) per unit weight of the cathode active substance. Compared with the test (1), lowering of the discharging capacity along with progress of the cycles was smaller, that is, the cycle life was better in test (II).

### (Example 4)

In this example, LiMn_{1.5}Fe_{0.5}O₄ was synthesized as a cathode active substance.

As the starting material, after weighing powders of electrolytic manganese dioxide, lithium carbonate (Li₂CO₃), and iron oxide (Fe₂O₃) so as to provide a predetermined metal element ratio, they were wet-mixed in a centrifugal ball mill at a room temperature for one hour with purified water to form a starting material powder. It was placed in an aluminum box and sintered in air at 800°C for 20 hours. The sintered starting material was pulverized and mixed again in the centrifugal ball mill and then sintered as second sintering in air at 800°C for 20 hours. When the obtained cathode active substance powder was examined by an X-ray diffraction apparatus, a diffraction peak of a spinel compound with no intrusion of an impurity phase was observed.

For the obtained cathode active substance, electrochemical characteristics were examined in the same manner as in Example 1 except for setting the final charging potential to 5.2 V on the metal Li basis. Fig. 11 shows a discharging curve illustrating a relation between a measured discharging potential on the metal lithium basis and a discharging capacity per unit weight of the cathode active substance. It had two discharging regions at high potential and low potential with 4.25 V as a boundary. A reversible capacity at 4.25 V or higher on the metal Li basis was 64 mAh/g.

Then, two electrochemical cells were manufactured and the cycle test (I) and the cycle test (II) were conducted in the same manner as in Example 1 except for setting the final charging potential to 5.2 V on the metal Li basis. However, the final discharging potential in the cycle test (II) was set to 4.25 V on the metal Li basis.

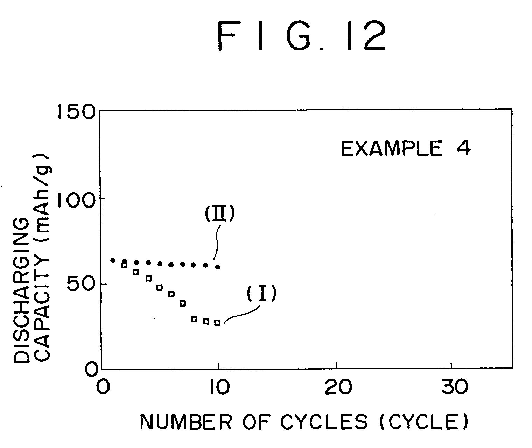

Fig. 12 shows a graph illustrating the relationship between the charge/discharge repeating number (number of cycles) of the cathode active substance and a charging capacity at high potential (4.25 V or higher) per unit weight of the cathode active substance. Compared with the test (1), lowering of the discharging capacity along with the progress of the cycles was smaller, that is, the cycle life was better in test (II).

From Examples 1 to 4 described above, in the cathode active substance having the two discharging regions, those using only the discharging region on the high potential side exhibited excellent cycle life.

### [Example 5]

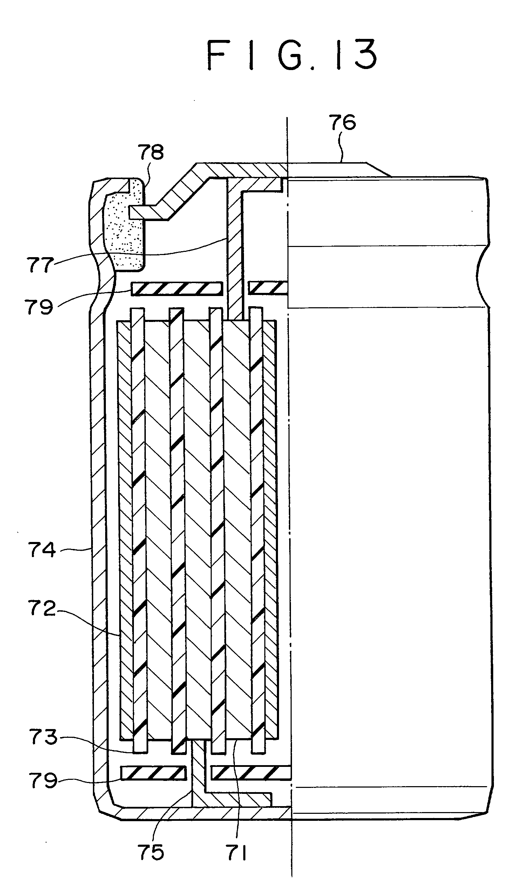

In this example, a cylindrical battery shown in Fig. 13 was manufactured based on the cathode active substance LiMn_{1.5}Ni_{0.5}O₄ prepared in Example 1. From the result of the charge/discharge test conducted in Example 1, LiMn_{1.5}Ni_{0.5}O₄ had the reversible capacity at 4.2 V or higher of 116 mAh/g, the reversible capacity at 3.0 V to 4.2 V of 12 mAh/g and the irreversible capacity of 9 mAh/g on the metal Li basis.

A cathode plate was prepared by the following procedures. A cathode active substance, a graphite conductive material and acetylene black were mixed by 500 g at a ratio of 90:8:2, to which 325 g of a PVDF solution diluted to 7% with NMP was further added. They were stirred by a mixer to form a slurry and continuously coated and dried on an aluminum foil of 20 µm thickness wound into a roll form by using a transfer type coating machine. This was applied on both surfaces of the aluminum foil. The coating amount was controlled in this case such that the amount of the mix per unit area after drying was 26.5 mg/cm². Subsequently, it was cut such that the coating length was 46 cm and the coating width was 5.4 cm for the mix and then roll pressed at a linear pressure of 250 kg/cm to prepare a cathode plate.

The cathode plate was used as a test cathode for an electrochemical cell in order to confirm whether or not the prepared cathode plate has the same capacity as designed in addition to the use for the manufacture of the battery. An aluminum collector tab was attached by spot welding to the cathode plate served for the battery by connection with a current terminal for taking out current.

Further, from the cathode plate for use in the electrochemical cell, a disk shape of 15 mm diameter was punched out by using a punching tool and the anode mix on one surface was completely peeled off by using NMP to prepare a test cathode coated on one surface. Using the test cathode, the electrochemical cell shown in Fig. 3 using metal Li for the counter electrode and the reference electrode was manufactured and charge/discharge test was conducted. Charge/discharge current was set to 0.5 mA, the final charging voltage was set to 5.1 V on the metal Li basis and the final discharging voltage was set to 3.0 V on the metal Li basis. Table 1 shows the result for a measured capacity of each cathode and a capacity for each cathode plate calculated from the coating area of the cathode plate.

**Table 1**

| | Cathode plate capacity | | (mAh) | Anode plate capacity (mAh) | | Battery capacity |
|---|---|---|---|---|---|---|
| | Reversibl e capacity at high potential (C_{H}) | Reversibl e capacity at low potential (C_{L}) | Irreversible capacity (C_{R}) | Reversibl e capacity (A_{R}) | Irreversible capacity (A_{IR}) | (D) (mAh) |
| Example 5 | 1329 | 138 | 103 | 1517 | 271 | 1195 |
| Example 6 | 1447 | 181 | 109 | 1663 | 302 | 1326 |
| Example 7 | 451 | 433 | 126 | 1865 | 568 | 327 |
| Comp. Example 1 | 1270 | 131 | 99 | 1609 | 86 | 1316 |

In the cathode plate, the electrode capacity (C_{H}) at discharging potential from 5.1 V to 4.2 V is 1329 mAh, and the electrode capacity (C_{L}) at discharging potential from 4.2 V to 3.0 V was 138 mAh and the irreversible capacity (C_{IR}) was 103 mAh.

Lumpy graphite (a) was selected for the anode active substance. For recognizing the reversible capacity and the irreversible capacity of the lumpy graphite (a), the electrochemical characteristics were examined by the following procedures. 90% by weight of the anode active substance was dispersed in a solution in which 10% by weight of PVDF was previously dissolved as a binder in NMP to form a slurry. After uniformly coating and drying the anode mix slurry on one surface of a copper foil of 15 µm thickness, it was compression molded such that the density of the anode mix was 1.5 g/cm³ by a roller press to prepare an anode plate. The anode plate was punched out into a disk shape of 15 mm diameter by using a punching tool to prepare a test anode. Using the test anode, an electrochemical cell shown in Fig. 3 was manufactured by using metal Li for the counter electrode and the reference electrode, and a charge/discharged test was conducted. The charge/discharge current was set to 0.5 mA, the final charging potential was set to 0.05 V on the metal Li basis, and the final discharge potential was set to 1.5 V on the metal Li basis. As a result of the measurement, the lumpy graphite (a) had a reversible capacity of 280 mAh/g and an irreversible capacity of 50 mAh/g.

The anode plate was prepared by the following procedures. 240 g of a PVDF solution diluted to 7% with NMP was added to 150 g of the lumpy graphite (a) as the anode active substance and stirred by a mixer to form a slurry, which was coated on a copper foil of 15 µm thickness by the same procedures as for the cathode plate. In this case, the coating amount was controlled such that the amount of mix per unit area after drying was 10.8 mg/cm². Then, it was cut in the same manner as for the cathode plate such that the coating length was 50 cm and the coating width was 5.6 cm for the mix and pressed to manufacture an anode plate. The anode plate was used as a test anode for an electrochemical cell in order to examine electrochemical characteristics in addition to the use for the manufacture of the battery. A nickel collector tab was attached by spot welding to the anode plate served for the battery.

Further, from the anode plate for use in the electrochemical cell, a disk shape of 15 mm diameter was punched out by using a punching tool and the anode mix on one surface was completely peeled off by using N-methyl pyrrolidone to prepare a test anode coated on one surface. Using the test anode, an electrochemical cell showing Fig. 3 using metal Li for the counter electrode and the reference electrode was manufactured and a charge/discharge test was conducted. The charge/discharge current was set to 0.5 mA, the final charging voltage was set to 0.05 V on the metal Li basis and the final discharging voltage was set to 1.5 V on the metal Li basis. Table 1 shows the result for a measured capacity of each test anodes and the reversible capacity and irreversible capacity of the anode plate calculated from the coating area of the anode plate. The anode plate had the reversible capacity (A_{R}) of 1517 mAh and the irreversible capacity (A_{IR}) of 271 mAh. Accordingly, a relation (C_{IR}) + (C_{L}) ≦ (A_{IR}) was obtained.

A cylindrical battery as shown in Fig. 13 was manufactured by using the thus prepared cathode plate and the anode plate. A prepared cathode plate 71, a anode plate 72 and a separator 73 were wound to prepare electrode groups. The separator was made of a finely porous polypropylene film of 25 µm thickness. The electrode groups were inserted into a battery casing 74 made of SUS, a anode collector tab 75 was welded to the bottom of the casing, and a cathode collector tab 77 was welded to a cathode current terminal 76. After injecting an electrolyte in which 1 mol/liter of an LiPF₆ salt was dissolved in an EC/DMC mixed solvent, a sealing lid 76 attached with the cathode terminal was caulked by way of a packing 78 to the battery casing 74 and tightly closed to form a cylindrical battery. Insulation plates 79 are disposed in upper and lower portions in the inside of the battery so that the battery casing 74 as the anode side and the positive plate 71, or the cathode terminal 76 and the anode plate 72 should be brought into contact to cause short circuiting.

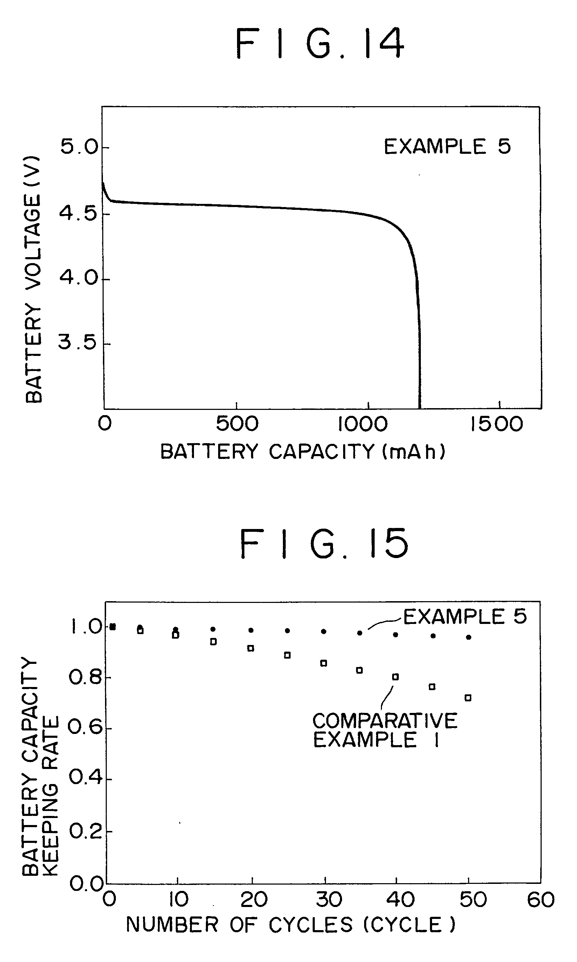

Copper wires were connected with the thus completed battery and a charge/discharge test was conducted. Charge/discharge current was 200 mA, the final charging voltage was 4.9 V and the final discharging voltage was 3.0 V. Fig. 14 shows a discharging curve of the battery in this example. Different from Comparative Example 1 to be described later, a lithium secondary battery having one discharging region with no inflection point in a range from 4.3 V or 3.0 V was obtained. Further, an average discharging voltage was 4.50 V. As shown in Table 1, the battery in this example had a discharging capacity (D) of 1195 mAh and having the relationship; (D) ≦ (C_{H}). Further, a lithium secondary battery with larger discharging capacity (D) compared with Example 7 (described below).

Further, a potential of the cathode was measured in a discharged state of the battery after completing the charge/discharge test described above and discharging to the final voltage of 3.0 V. The lithium secondary battery of this embodiment after the test was disassembled in a glove box sealed with argon to take out the cathode plate. After cutting the taken out cathode plate to 5 cm × 5.4 cm size, it was thoroughly cleaned with dimethyl carbonate and the cleaning solution was dried thoroughly. Subsequently, after completely removing the mixed surface of the cathode plate with NMP after drying, it was punched into a disk shape of 15 mm diameter by using a punching tool to prepare a test electrode coated on one surface. By using the test cathode, the electrochemical cell shown in Fig. 3 was manufactured by using the metal Li for the counter electrode and the reference electrode, and an open circuit potential of the test cathode on metal Li basis was measured. As a result, the potential of the cathode of the lithium secondary battery in this example discharged to the final voltage of 3.0 V was 4.48 V, which was higher than 4.2 V.

Further, a cycle test of repeating charge/discharge under the charge/discharge conditions described above was conducted. Fig. 15 shows a relation between the repetitive number of charge/discharge (number of cycles) and a degradation ratio from the initial battery capacity of this example. Compared with Comparative Example 1 (described below), a lithium secondary battery with greater capacity and excellent cycle life was obtained.

Further, a discharging test under high load while setting the discharging current to 2 A, among the charge/discharging conditions, described above was conducted. In the lithium secondary battery of this example, an obtained electrical quantity was 1040 mAh and a electric power capacity was 4180 Wh. Compared with the lithium secondary battery of Comparative Example 1 to be described later, since there is no requirement for the restriction of the operation voltage in order to prevent degradation caused by repetitive charge/discharge, a lithium secondary battery excellent in both electrical quantity and power capacity could be obtained.

### [Comparative Example 1]

In this comparative example, a cathode plate and a test cathode for confirming the capacity were prepared in the same manner as in Example 5 except for changing the coating amount of the slurry such that the amount of mix per unit area after drying was 25.3 mg/cm² on one surface. For the test cathode, charge/discharge test was conducted in the same manner as in Example 5. Table 1 shows the result for the measurement capacity of each test cathode and capacity of each cathode plate calculated from the coating area of the cathode plate. In the cathode plate, the electrode capacity (C_{H}) for the discharging potential from 5.1 V to 4.2 V was 1270 mAh, the electrode capacity (C_{L}) for the discharging potential from 4.2 V to 3.0 V was 131 mAh and the irreversible capacity (C_{IR}) was 99 mAh.

Lumpy graphite (b) was used for the anode active substance. As a result of examining the electrochemical characteristics of the lumpy graphite (b) in the same manner as in Example 5, the reversible capacity was 280 mAh/g and the irreversible capacity was 15 mAh/g. Using the lumpy graphite (b), a anode plate and a test anode were prepared in the same manner as in Example 5 except for controlling the coating amount such that the amount of the mix per unit area after drying was 11.4 mg/cm². Each capacity of the test anode was confirmed in the same manner as in Example 5. Table 1 shows the measured capacity of each test anode, the reversible capacity of the anode plate and the irreversible capacity calculated from the coating area of the anode plate. In the anode plate, the reversible capacity (A_{R}) was 1609 mAh and the irreversible capacity (A_{IR}) was 86 mAh and it does not satisfy the relation: (C_{IR}) + (C_{L}) ≦ (A_{R}).

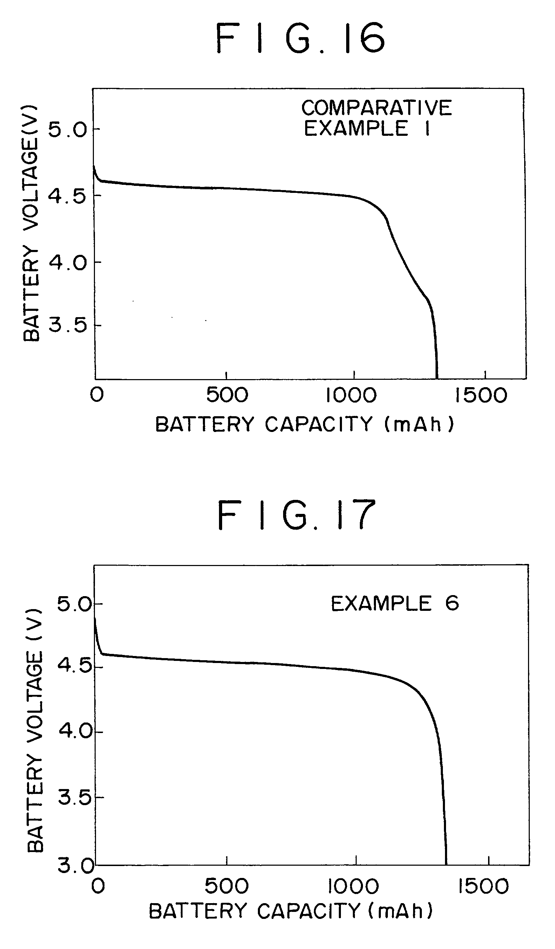

A cylindrical battery was manufactured from the cathode plate and the anode plate in the same manner as in Example 5 and charge/discharge test was conducted in the same manner as in Example 5. Fig. 16 shows a discharging curve of the battery in this comparative example. An inflection point was observed near 4.1 V and two discharging regions were observed distinctly. In the cylindrical secondary battery of this comparative example, the average discharging voltage was 4.45 V. As shown in Table 1, the discharging capacity (D) of the battery of this comparative example was 1316 mAh, and it does not satisfy the relation: (D) ≦ (C_{H}).

Further, in the same manner as in Example 5, the potential of the cathode was measured in the discharged state of the battery of this comparative example after completing the charge/discharge test and discharging to the final voltage of 3.0 V. As a result, the potential of the cathode on the metal Li basis was 4.05 V, which was lower than 4.2 V.

Further, a cycle test was conducted in the same manner as in Example 5. Fig. 15 shows a relation between repetitive number of charge/discharge (number of cycles) of the cylindrical battery and the degradation ratio from the initial battery capacity of the cylindrical battery of this example. Compared with Example 5, since degradation of the cathode active substance proceeded due to repetitive charge/discharge, in the battery of this comparative example, the capacity decreased steadily as the number of cycles were increased.

Further, a discharging test under high load was conducted in the same manner as in Example 5 except for setting the final discharging voltage to 4.1 V so as not to use the low voltage discharging region. In the lithium secondary battery of this comparative example, electrical quantity of 512 mAh and power capacity of 2570 Wh were obtained. When the operation voltage was restricted in order to prevent degradation caused by repetitive charge/discharge the battery in this comparative example, both the obtained electrical quantity and the power capacity in the use of higher power were lowered compared with example 5.

### [Example 6]

In this example, a cylindrical battery was manufactured based on the cathode active substance, LiMn_{1.51}Ni_{0.48}B_{0.01}O₄ prepared in Example 2. From the result of the charge/discharge test conducted in Example 2, LiMn_{1.51}Ni_{0.48}B_{0.01}O₄ had the reversible capacity at 4.2 V or higher of 120 mAh/g, and the reversible capacity at 3.0 V to 4.2 V of 15 mAh/g, and an irreversible capacity of 9 mAh/g on the metal Li basis.

Using the cathode active substance, a cathode plate and a test cathode for confirming the capacity were prepared in the same manner as in Example 5 except for changing the coating amount of the slurry such that the amount of the mix per unit area after drying was 27.9 mg/cm². For the test cathode, charge/discharging test was conducted in the same manner as in Example 5. Table 1 shows the result for the measured capacity of each test cathode and the capacity of each cathode plate calculated from the coating area of the cathode plate. The cathode plate had the electrode capacity (C_{H}) for the discharging potential from 5.1 V to 4.2 V of 1447 mAh, the electrode capacity (C_{L}) for the discharging potential from 4.2 V to 3.0 V was 181 mAh and the irreversible capacity (C_{IR}) was 109 mAh. As the anode active substance, flaky graphite (a) was selected. As a result of examining the electrochemical characteristics of the flaky graphite (a) in the same manner as in Example 5, the reversible capacity was 330 mAh/g and the irreversible capacity was 60 mAh/g.

Using the flaky graphite (a), an anode plate and a test anode were prepared in the same manner as in Example 5 except for varying the coating amount such that the amount of the mix per unit area after drying was 10.0 mg/cm². The capacity of each test anode was confirmed in the same manner as in Example 5. Table 1 shows the measured capacity of each test anode, and the reversible capacity and the irreversible capacity of the anode plate calculated from the coating area of the anode plate. In the anode plate, the reversible capacity (A_{R}) was 1663 mAh and the irreversible capacity (A_{IR}) was 302 mAh and, accordingly, it can satisfy the relation: (C_{IR}) + (C_{L}) ≦ (A_{IR}).

A cylindrical battery was manufactured from the cathode plate and the anode plate in the same manner as in Example 5 and a charge/discharge test was conducted in the same manner as in Example 5. Fig. 17 shows a discharging curve of the battery in this comparative example. Different from Comparative Example 1, a lithium secondary battery with no inflection point in a range from 4.3 V to 3.0 V and having one discharging region was obtained. Further, the average discharging voltage was 4.48 V. As shown in Table 1, the battery of this example had the discharging capacity (D) of 1326 mAh and satisfied a relation: (D) ≦ (C_{H}). Further, a lithium secondary battery with larger discharging capacity (D) compared with Example 7 (described below).

Further, in the same manner as in Example 5, the potential of the cathode was measured in a discharged state of the battery of this example after completing the charge/discharge test and discharging to the final voltage of 3.0 V. As a result, the potential of the cathode on the metal Li basis was 4.41 V, which was 4.2 V or higher.

### [Example 7]

In this example, a circuit battery was manufactured based on the cathode active substance LiMn_{1.5}Fe_{0.5}O₄ prepared in Example 4. From the result of the charge/discharge test conducted in Example 4, LiMn_{1.5}Fe_{0.5}O₄ had the reversible capacity at 4.25 V or higher of 64 mAh/g, the reversible capacity at 3.0 V to 4.25 V was 63 mAh/g and the irreversible capacity of 18 mAh/g on the metal Li basis.

Using the cathode active substance, a cathode plate and a test cathode were prepared in the same manner as in Example 5 except for changing the amount of the mix per unit area after drying to 12.5 mg/cm² and the coating length of the mix to 60 cm. A charge/discharge test was conducted in the same manner as in Example 5 for the test cathode except for changing the final charging potential to 5.2 V on the metal Li basis. Table 1 shows the result of the measured capacity of each test cathode and the capacity of each cathode plate calculated from the coating area of the cathode plate. In the cathode plate, the electrode capacity (C_{H}) for the discharging potential from 5.2 V to 4.25 V was 451 mAh, the electrode capacity (C_{L}) for the discharging potential at 4.25 V to 3.0 V was 433 mAh and the irreversible capacity (C_{IR}) was 126 mAh.

As the anode active substance, flaky graphite (b) was used. As a result of examining the electrochemical characteristics of the flaky graphite (b) in the same manner as in Example 5, the reversible capacity was 280 mAh/g and the irreversible capacity was 80 mAh/g.

Using the flaky graphite (b), an anode plate and a test anode were prepared in the same manner as in Example 5 except for changing the coating amount of the mix per unit area after drying to 11.0 mg/cm² and the coating length of the mixed sample was 64 cm. The capacity of each test anode was confirmed in the same manner as in Example 5. Table 1 shows the measured capacity of each test anode, the reversible capacity and the irreversible capacity of the anode plate calculated from the coating area of the anode plate. In the anode plate, the reversible capacity (A_{R}) was 1865 mAh and the irreversible capacity (A_{IR}) was 568 mAh and it satisfied the relation: (C_{IR}) + (C_{L}) ≦ (A_{IR}).

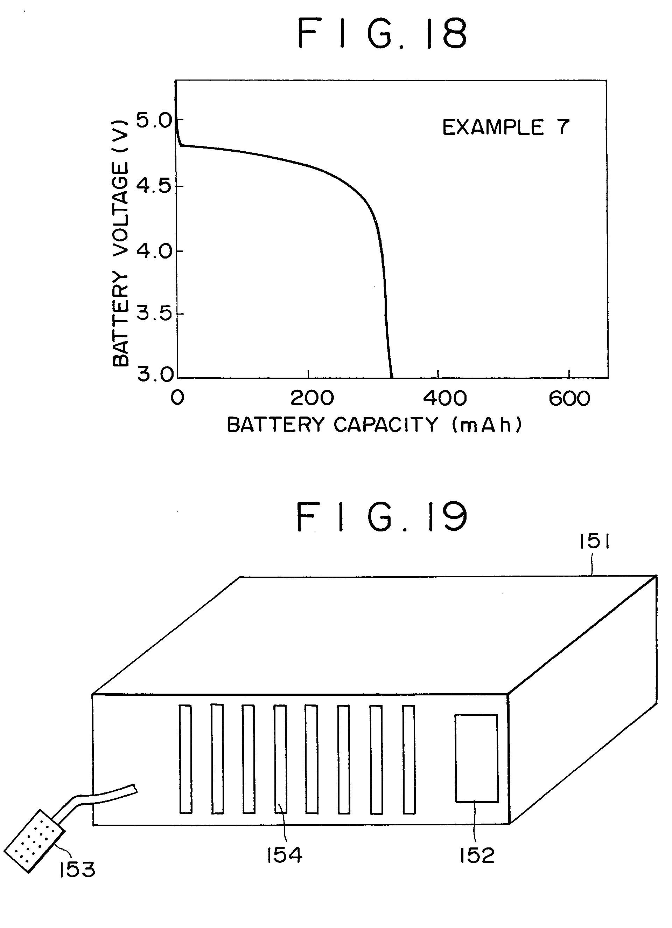

A cylindrical battery was manufactured from the cathode plate and the anode plate in the same manner as in Example 5 and a charge/discharge test was conducted in the same manner as in Example 5 except for changing the charge/discharge current to 50 mA and the final discharging voltage to 5.0 V. Fig. 18 shows a discharging curve of the battery in this comparative example. Different from Comparative Example 1, a lithium secondary battery with no inflection point in a range from 4.3 V to 3.0 V and having one discharging region was obtained. As shown in Table 1, the battery of this example had the discharging capacity (D) of 327 mAh and satisfied the relation: (D)≦ (C_{H}). Further, the average discharging voltage was 4.52 V.

Further, in the same manner as in Example 5, the potential of the cathode was measured in a discharged state of the battery of this comparative example after completing the charge/discharge test and discharging to the final voltage of 3.0 V. As a result, the potential of the cathode on the metal Li basis was 4.36 V, which was 4.25 V or higher.

### (Example 8)

In this example, a lithium secondary battery module shown in Fig. 19 was manufactured by using the lithium secondary battery of Example 5.

Batteries were connected by eight in series and contained in a square resin container 151. A control circuit 152 for controlling charge/discharge of the battery is also accommodated in the square resin container 151. Current is inputted and outputted by way of a cable 153. Further, cooling air ports 154 are also formed on the container 151. A signal line for monitoring the charge/discharge state is connected to each of the batteries and a monitor signal is transmitted by way of the signal line to the control circuit.

After fully charging the module of Example 5, a load was connected to examine discharging characteristics. A test was conducted at a low power of 1.9 A (corresponding to 0.2 C) and at a high power of 19 A (corresponding to 2 C) of the discharging current while setting the final charging voltage to 39 V (4.9 V per one battery) and the final discharging voltage to 24 V (3.0 V per one battery) for the module. The electrical quantity obtained from the module was 9.3 Ah at low power and 7.9 Ah at high power and an electrical quantity of 85% for the low power could be obtained.

Further, output electric power capacity upon high power was 31.6 Wh. Compared with a lithium secondary battery module of Comparative Example 2 (described below), since there is no requirement for restriction of the operation voltage of the module in order to prevent the degradation caused by repetitive charge/discharge in this example, the operation voltage could be extended and a lithium secondary battery excellent both in the electrical quantity and the power capacity obtained for the use of high power could be obtained.

### (Comparative Example 2)

In this comparative example, a lithium secondary battery module was manufactured in the same manner as in Example 8 except for using the lithium secondary battery in Comparative Example 1. After fully charging the module of the Comparative Example 2, it was connected with a load and discharging characteristics were examined in the same manner as in Example 5 except for changing the final discharging voltage to 33 V (about 4.1 V per one battery). The electrical quantity obtained from the module was 9.6 Ah at low power and 4.6 Ah at high power, and only 48% electrical quantity at the low power could be obtained. Further, the output power capacity at high power was 19.3 Wh. Accordingly, compared with Example 8, both electrical quantity and the power capacity were lower at high power.

### (Example 9)

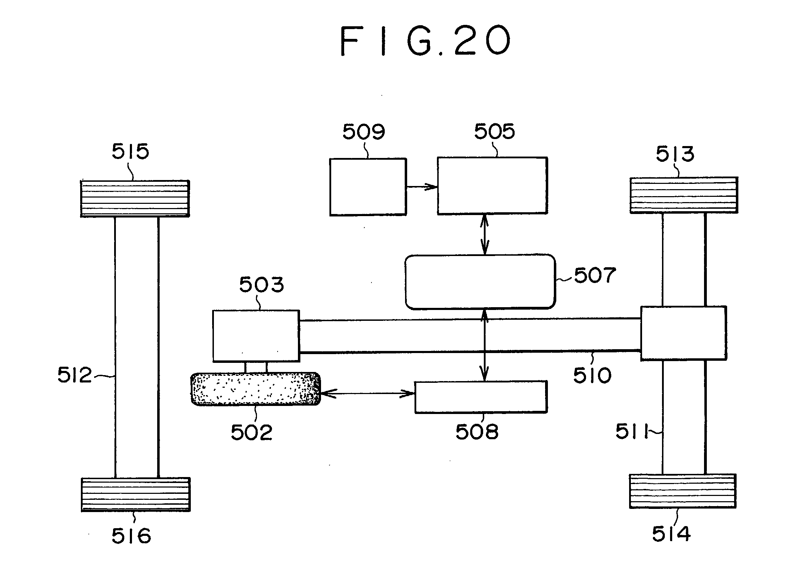

In this example, an electric automobile of a constitution shown in Fig. 20 was manufactured by using a lithium secondary battery module according to this invention.

The lithium secondary battery used in this example was designed and manufactured in the same manner as in Example 2 and showed a discharging capacity of 90 Ah in a charge/discharge test at charge/discharge current of 18 A, a final charging voltage of 4.9 V and a final discharging voltage of 3.0 V.

The lithium secondary batteries were connected by eight in series to prepare a secondary battery module like that in Example 8. An operational voltage range of the module is 39 V on the charged side (4.9 V per one battery) and 24 V on the discharging side (3.0 V per one battery). In the electric automobile of this example, the secondary battery modules were connected by three in series and mounted to constitute a module unit 507. An axle 510 connected with a 25 kW electric motor 502 by way of a gear mechanism 503 was connected to a wheel axis 511 of wheels 513 and 514. The module unit 507 was connected by way of an inverter 508 to the electric motor 502 to supply electric current. A module control circuit 505 was connected with the module unit 507 to control the operation of the module. An output from an acceleration pedal 509 was inputted to the module control circuit 505. The body weight of the electric motor of this example was 880 kg.

Upon starting, output by the actuation to the acceleration pedal 509 is inputted to the module control circuit 505 to instruct starting of the electric motor 502. The module control circuit 505 caused the module unit 507 to output a DC power, which was converted into AC power by the inverter 508 and supplied to the electric motor 502. The power of the electric motor 502 was transmitted by way of the gear mechanism 503 to the axle 510. This rotated the wheel shaft 511 to rotate the wheels 513, 514.

A running test was conducted by the electric motor of this example at 40 km/h and 100 km/h. The cruising range was 109 km at 40 km/h and 78 km at 100 km/h. An electric automobile of longer cruising range at high speed running could be obtained compared with Comparative Example 3 (described below).

### (Comparative Example 3)

In this comparative example, an electric automobile was manufactured as described below. The lithium secondary batteries were manufactured in the same manner as the lithium secondary battery in Example 9 except for designing them in the same manner as in Comparative Example 1. Further, an electric automobile using the lithium secondary battery module constituted with the batteries was manufactured. It showed a discharging capacity of 92 Ah upon a charge/discharge test by setting the charge/discharge current to 18 A, the final charging voltage to 4.9 V, and the final discharging voltage to 3.0 V. The secondary battery module was manufactured from them in the same manner as in Example 9 to constitute an electric automobile. The body weight of the electric automobile of this comparative example was 880 kg. The operation voltage range of the module was 39 V on the charged side (4.9 V per one battery) and 33 V on the discharged side (about 4.1 V per one battery).

The same running test as in Example 9 was conducted for the electric automobile of this example. The cruising range was 113 km at 40 km/h and 46 km at 100 km/h. Accordingly, the cruising distance was shorter at high speed testing compared with Example 9. The secondary battery according to this invention is applicable not only to the electric automobiles as described above but also those equipment which are driven and operated by using such electric energy.

Hence, a battery is provided comprising a cathode having a plurality of discharging regions within an operational potential range and an anode having a irreversible capacity, wherein a potential of the cathode in a completely discharged state is at least equal or greater than the highest potential among the plurality of discharging regions. In other words, a battery is provided comprising a cathode having a plurality of discharging regions within an operational potential range and an anode having a irreversible capacity, wherein the battery has one discharging region that completely discharges from a final charged voltage to a final discharged voltage without an inflection point.

Although the invention has been described above in connection with exemplary embodiments, it is apparent that many modifications and substitutions can be made without departing from the spirit or scope of the invention. Accordingly, the invention is not to be considered as limited by the foregoing description, but is only limited by the scope of the appended claims.

## Claims

1. A battery comprising:
a cathode having a plurality of discharging regions within an operational potential range;
an anode having a first irreversible capacity (A_{IR});
a separator for electrically insulating said cathode and said anode; and
an electrolyte for electrochemically reacting said cathode and said anode;
wherein the potential of the cathode in the completely discharged state is at least equal or greater than the highest potential among said plurality of discharging regions.

2. A battery comprising:
a cathode having a plurality of discharging regions within an operational potential range;
an anode having a first irreversible capacity (A_{IR});
a separator for electrically insulating said cathode and said anode; and
an electrolyte for electrochemically reacting said cathode and said anode;
wherein said battery has one discharging region that completely discharges from the final charged voltage to the final discharged voltage without an inflection point.

3. A battery comprising:
a cathode having a plurality of discharging regions within an operational potential range;
an anode having a first irreversible capacity (A_{IR});
a separator for electrically insulating said cathode and said anode; and
an electrolyte for electrochemically reacting said cathode and said anode;
wherein the potential of the cathode in the completely discharged state is at least equal or greater than the highest potential among said plurality of discharging regions and said cathode further comprises a second irreversible capacity (C_{IR}) and a first reversible capacity (C_{L}) at a potential lower than said highest potential, having the relationship: (C_{IR}) + (C_{L}) ≤ (A_{IR}).

4. A battery comprising:
a cathode having a plurality of discharging regions within an operational potential range;
an anode having a first irreversible capacity (A_{IR});
a separator for electrically insulating said cathode and said anode; and
an electrolyte for electrochemically reacting said cathode and said anode;
wherein the potential of the cathode in the completely discharged state is at least equal or greater than the highest potential among said plurality of discharging regions and wherein said battery has a capacity (D) and said cathode further comprises a second reversible capacity (C_{H}) at a potential at least equal or greater than said highest potential, having the relationship: (D) ≤ (C_{H}).

5. A battery comprising:
a cathode having a plurality of discharging regions within an operational potential range;
an anode having a first irreversible capacity (A_{IR});
a separator for electrically insulating said cathode and said anode; and
an electrolyte for electrochemically reacting said cathode and said anode;
wherein the potential of the cathode in the completely discharged state is at least equal or greater than the highest potential among said plurality of discharging regions and wherein a second reversible capacity (C_{H}) and a first electrical quantity (D_{C}) reversibly entering and exiting the cathode during operation of said battery has the relationship: (D_{C}) ≤ (C_{H}).

6. A battery comprising:
a cathode having a plurality of discharging regions within an operational potential range;
an anode having a first irreversible capacity (A_{IR});
a separator for electrically insulating said cathode and said anode; and
an electrolyte for electrochemically reacting said cathode and said anode;
wherein the potential of the cathode in the completely discharged state is at least equal or greater than the highest potential among said plurality of discharging regions and wherein a second reversible capacity (C_{H}) and a second electrical quantity (D_{A}) reversibly entering and exiting the anode during operation of said battery has the relationship: (D_{A}) ≤ (C_{H}).

7. A method of manufacturing a battery comprising the steps of:
providing a cathode having a plurality of discharging regions within an operational potential range;
providing an anode having a first irreversible capacity (A_{IR});
providing a separator for electrically insulating said cathode and said anode; and
providing an electrolyte for electrochemically reacting said cathode and said anode;
wherein the potential of the cathode in the completely discharged state is at least equal or greater than the highest potential among said plurality of discharging regions.

8. The invention of claim 1 or 7, wherein said cathode further comprises a second irreversible capacity (C_{IR}) and a first reversible capacity (C_{L}) at a potential lower than said highest potential, having the relationship: (C_{IR}) + (C_{L}) ≤ (A_{IR}).

9. The invention of claim 1 or 7, wherein said battery has a capacity (D) and said cathode further comprises a second reversible capacity (C_{H}) at a potential at least equal or greater than said highest potential, having the relationship: (D) ≤ (C_{H}).

10. The invention of claim 1 or 7, wherein a second reversible capacity (C_{H}) and a first electrical quantity (D_{C}) reversibly entering and exiting the cathode during operation of said battery has the relationship: (D_{C}) ≤ (C_{H}).

11. The invention of claim 1 or 7, wherein a second reversible capacity (C_{H}) and a second electrical quantity (D_{A}) reversibly entering and exiting the anode during operation of said battery has the relationship: (D_{A}) ≤ (C_{H}).

12. The invention of claim 1 or 7, wherein said cathode contains a composite oxide comprising Li, Mn and at least one other transition metal.

13. The invention of claim 12 wherein at least Ni is contained in said composite oxide.

14. The invention of claim 8 wherein said first reversible capacity (C_{L}) of said cathode has a potential within the range from about 3.0 V to about 4.2

15. The invention of claim 9 wherein said second reversible capacity (C_{H}) of said cathode has a potential of about 4.2 V or higher and said capacity (D) of said battery has a final discharging voltage range of about 3.0 V to about 5.5 V.

16. The invention of claim 1 or 7, further comprising a plurality of said batteries connected in series or parallel, and each of said plurality of batteries comprises a voltage detection section for detecting the voltage of said battery and a control section for controlling current of said battery.

17. The invention of claim 1 or 7, wherein said battery is a lithium secondary battery.

18. invention of claim 1 or 7, wherein said battery is utilised in an electrical device.

19. A method of manufacturing a battery comprising the steps of:
providing a cathode having a plurality of discharging regions within an operational potential range;
providing an anode having a first irreversible capacity (A_{IR});
providing a separator for electrically insulating said cathode and said anode; and
providing an electrolyte for electrochemically reacting said cathode and said anode;
wherein said battery has one discharging region that completely discharges from the final charged voltage to the final discharged voltage without an inflection point.

20. The invention of claim 2 or 19 wherein the potential difference from said final charged voltage to said final discharged voltage is at least 1.0 V or higher, preferably 3.0 V or higher, and preferably 5.0 V or lower.

21. A method of manufacturing a battery comprising the steps of:
providing a cathode having a plurality of discharging regions within an operational potential range;
providing an anode having a first irreversible capacity (A_{IR});
providing a separator for electrically insulating said cathode and said anode; and
providing an electrolyte for electrochemically reacting said cathode and said anode;
wherein the potential of the cathode in the completely discharged state is at least equal or greater than the highest potential among said plurality of discharging regions and said cathode further comprises a second irreversible capacity (C_{IR}) and a first reversible capacity (C_{L}) at a potential lower than said highest potential, having the relationship: (C_{IR}) + (C_{L}) ≤ (A_{IR}).

22. A method of manufacturing a battery comprising the steps of:
providing a cathode having a plurality of discharging regions within an operational potential range;
providing an anode having a first irreversible capacity (A_{IR});
providing a separator for electrically insulating said cathode and said anode; and
providing an electrolyte for electrochemically reacting said cathode and said anode;
wherein the potential of the cathode in the completely discharged state is at least equal or greater than the highest potential among said plurality of discharging regions and wherein said battery has a capacity (D) and said cathode further comprises a second reversible capacity (C_{H}) at a potential at least equal or greater than said highest potential, having the relationship: (D) ≤ (C_{H}).

23. A method of manufacturing a battery comprising the steps of:
providing a cathode having a plurality of discharging regions within an operational potential range;
providing an anode having a first irreversible capacity (A_{IR});
providing a separator for electrically insulating said cathode and said anode; and
providing an electrolyte for electrochemically reacting said cathode and said anode;
wherein the potential of the cathode in the completely discharged state is at least equal or greater than the highest potential among said plurality of discharging regions and wherein a second reversible capacity (C_{H}) and a first electrical quantity (D_{C}) reversibly entering and exiting the cathode during operation of said battery has the relationship: (D_{C}) ≤ (C_{H}).

24. A method of manufacturing a battery comprising the steps of:
providing a cathode having a plurality of discharging regions within an operational potential range;
providing an anode having a first irreversible capacity (A_{IR});
providing a separator for electrically insulating said cathode and said anode; and
providing an electrolyte for electrochemically reacting said cathode and said anode;
wherein the potential of the cathode in the completely discharged state is at least equal or greater than the highest potential among said plurality of discharging regions and wherein a second reversible capacity (C_{H}) and a second electrical quantity (D_{A}) reversibly entering and exiting the anode during operation of said battery has the relationship: (D_{A}) ≤ (C_{H}).

25. An electric automobile comprising:
an electric motor for rotating axles; and
a power source for powering said electric motor, said power source being a battery in accordance with any of claims 1 to 6, 8 to 18 and 20.
